# EUROPEAN PATENT APPLICATION

(11) **EP 4 727 195 A1**
(43) Date of publication of application: **15.04.2026**
(21) Application number: 23940763.8
(22) Date of filing: 09.06.2023
(51) Int. Cl.: H04W 16/28, H04W 24/10, H04W 76/18

(54) **TERMINAL, WIRELESS COMMUNICATION METHOD, AND BASE STATION**

(71) Applicant: NTT DOCOMO, INC., Tokyo 100-6150 (JP)
(72) Inventor: MATSUMURA, Yuki, Tokyo 100-6150 (JP); NAGATA, Satoshi, Tokyo 100-6150 (JP); SUN, Weiqi, Beijing 100190 (CN); WANG, Jing, Beijing 100190 (CN); CHEN, Lan, Beijing 100190 (CN)
(74) Representative: Hoffmann Eitle
(86) International application number: PCT/JP2023/021525
(87) International publication number: WO 2024/252665

(57) **Abstract**

A terminal according to one aspect of the present disclosure includes a receiving section that receives a configuration or an indication related to multi-transmission/reception point (TRP), and a control section that determines to perform at least one of first beam reporting for a first TRP and second beam reporting for a second TRP, based on the configuration or the indication and an event. According to one aspect of the present disclosure, it is possible to appropriately perform beam reporting and application of a TCI state.

## Description

### Technical Field

The present disclosure relates to a terminal, a radio communication method, and a base station in next-generation mobile communication systems.

### Background Art

In a Universal Mobile Telecommunications System (UMTS) network, the specifications of Long Term Evolution (LTE) have been drafted for the purpose of further increasing high speed data rates, providing lower latency and so on (Non-Patent Literature 1). In addition, for the purpose of further high capacity, advancement and the like of LTE (Third Generation Partnership Project (3GPP (registered trademark)) Release (Rel.) 8 and Rel. 9), the specifications of LTE-Advanced (3GPP Rel. 10 to Rel. 14) have been drafted.

Successor systems of LTE (for example, also referred to as "5th generation mobile communication system (5G)," "5G+ (plus)," "6th generation mobile communication system (6G)," "New Radio (NR)," "3GPP Rel. 15 (or later versions)," and so on) are also under study.

### Citation List

### Non-Patent Literature

Non-Patent Literature 1: 3GPP TS 36.300 V8.12.0 "Evolved Universal Terrestrial Radio Access (E-UTRA) and Evolved Universal Terrestrial Radio Access Network (E-UTRAN); Overall description; Stage 2 (Release 8)," April, 2010

### Summary of Invention

### Technical Problem

For future radio communication systems (for example, NR), it is studied that a user terminal (terminal, User Equipment (UE)) controls transmission/reception processing, based on information related to quasi-co-location (QCL) (QCL assumption/Transmission Configuration Indication (TCI) state/spatial relation).

For Rel. 18 or later versions, introduction of beam reporting based on an event is under study.

Meanwhile, studies have not been sufficiently made on the beam reporting. Unless this study is sufficient, degradation in communication quality, throughput reduction, and the like may be caused.

Thus, an object of the present disclosure is to provide a terminal, a radio communication method, and a base station that appropriately perform beam reporting and application of a TCI state.

### Solution to Problem

A terminal according to one aspect of the present disclosure includes a receiving section that receives a configuration or an indication related to multi-transmission/reception point (TRP), and a control section that determines to perform at least one of first beam reporting for a first TRP and second beam reporting for a second TRP, based on the configuration or the indication and an event.

### Advantageous Effects of Invention

According to one aspect of the present disclosure, it is possible to appropriately perform beam reporting and application of a TCI state.

### Brief Description of Drawings

[FIG. 1] FIG. 1A and FIG. 1B show examples of a unified/common TCI framework.
[FIG. 2] FIG. 2A and FIG. 2B show examples of DCI-based TCI state indication.
[FIG. 3] FIG. 3 is a diagram to show an example of a timeline for TCI state switching/activation defined in Rel. 15/16 or earlier versions.
[FIG. 4] FIG. 4 is a diagram to show an example of a TCI state defined in Rel. 16 or earlier versions.
[FIG. 5] FIG. 5 is a flowchart to show an example of processing of event-triggered beam reporting.
[FIG. 6] FIG. 6 is a diagram to show an example of a MAC CE for beam reporting for option 1-1.
[FIG. 7] FIG. 7 is a diagram to show an example of a MAC CE for beam reporting for option 1-2.
[FIG. 8] FIG. 8 is a diagram to show an example of beam update according to a second embodiment.
[FIG. 9] FIG. 9 is a diagram to show an example of beam update according to a fifth embodiment.
[FIG. 10] FIG. 10 is a diagram to show an example of a schematic structure of a radio communication system according to one embodiment.
[FIG. 11] FIG. 11 is a diagram to show an example of a structure of a base station according to one embodiment.
[FIG. 12] FIG. 12 is a diagram to show an example of a structure of a user terminal according to one embodiment.
[FIG. 13] FIG. 13 is a diagram to show an example of a hardware structure of the base station and the user terminal according to one embodiment.
[FIG. 14] FIG. 14 is a diagram to show an example of a vehicle according to one embodiment.

### Description of Embodiments

### (TCI, Spatial Relation, QCL)

For NR, control of reception processing (for example, at least one of reception, demapping, demodulation, and decoding) and transmission processing (for example, at least one of transmission, mapping, precoding, modulation, and coding) of at least one of a signal and a channel (expressed as a signal/channel) in a UE, based on a transmission configuration indication state (TCI state) is under study.

The TCI state may be a state applied to a downlink signal/channel. A state that corresponds to the TCI state applied to an uplink signal/channel may be expressed as a spatial relation.

The TCI state is information related to quasi-co-location (QCL) of the signal/channel, and may be referred to as a spatial reception parameter, spatial relation information, or the like. The TCI state may be configured for the UE for each channel or for each signal.

QCL is an indicator indicating statistical properties of the signal/channel. For example, when a certain signal/channel and another signal/channel are in a relationship of QCL, it may be indicated that it is assumable that at least one of Doppler shift, a Doppler spread, an average delay, a delay spread, and a spatial parameter (for example, a spatial reception parameter (spatial Rx parameter)) is the same (the relationship of QCL is satisfied in at least one of these) between such a plurality of different signals/channels.

Note that the spatial reception parameter may correspond to a receive beam of the UE (for example, a receive analog beam), and the beam may be identified based on spatial QCL. The QCL (or at least one element in the relationship of QCL) in the present disclosure may be interpreted as sQCL (spatial QCL).

For the QCL, a plurality of types (QCL types) may be defined. For example, four QCL types A to D may be provided, which have different parameter(s) (or parameter set(s)) that can be assumed to be the same, and such parameter(s) (which may be referred to as QCL parameter(s)) are described below:
- QCL type A (QCL-A): Doppler shift, Doppler spread, average delay, and delay spread
- QCL type B (QCL-B): Doppler shift and Doppler spread
- QCL type C (QCL-C): Doppler shift and average delay
- QCL type D (QCL-D): Spatial reception parameter

Such QCL information as that described in QCL types A to D described above may be referred to as a QCL property.

A case that the UE assumes that a certain control resource set (CORESET), channel, or reference signal is in a relationship of specific QCL (for example, QCL type D) with another CORESET, channel, or reference signal may be referred to as QCL assumption.

The UE may determine at least one of a transmit beam (Tx beam) and a receive beam (Rx beam) of the signal/channel, based on the TCI state or the QCL assumption of the signal/channel.

The TCI state may be, for example, information related to QCL between a channel as a target (in other words, a reference signal (RS) for the channel) and another signal (for example, another RS). The TCI state may be configured (indicated) by higher layer signaling or physical layer signaling, or a combination of these.

The physical layer signaling may be, for example, downlink control information (DCI).

A channel for which the TCI state or spatial relation is configured (specified) may be, for example, at least one of a downlink shared channel (Physical Downlink Shared Channel (PDSCH)), a downlink control channel (Physical Downlink Control Channel (PDCCH)), an uplink shared channel (Physical Uplink Shared Channel (PUSCH)), and an uplink control channel (Physical Uplink Control Channel (PUCCH)).

The RS to have a QCL relationship with the channel may be, for example, at least one of a synchronization signal block (SSB), a channel state information reference signal (CSI-RS), a reference signal for measurement (Sounding Reference Signal (SRS)), a CSI-RS for tracking (also referred to as a Tracking Reference Signal (TRS)), and a reference signal for QCL detection (also referred to as a QRS).

The SSB is a signal block including at least one of a primary synchronization signal (PSS), a secondary synchronization signal (SSS), and a broadcast channel (Physical Broadcast Channel (PBCH)). The SSB may be referred to as an SS/PBCH block.

An RS of QCL type X in a TCI state may mean an RS in a relationship of QCL type X with (a DMRS of) a certain channel/signal, and this RS may be referred to as a QCL source of QCL type X in the TCI state.

### (Unified/common TCI Framework)

With a unified TCI framework, a plurality of types of (UL/DL) channels/RSs can be controlled by a common framework. A unified TCI framework may indicate a common beam (common TCI state) and apply the common beam to all the UL and DL channels instead of defining a TCI state or a spatial relation for each channel as in Rel. 15, or apply a common beam for UL to all the UL channels while applying a common beam for DL to all the DL channels.

One common beam for both DL and UL or a common beam for DL and a common beam for UL (two common beams in total) are studied.

The UE may assume the same TCI state (joint TCI state, joint TCI pool, joint common TCI pool, joint TCI state set) for UL and DL. The UE may assume respective different TCI states (separate TCI states, separate TCI pools, UL separate TCI pool and DL separate TCI pool, separate common TCI pools, UL common TCI pool and DL common TCI pool) for UL and DL.

By beam management based on a MAC CE (MAC CE level beam indication), default UL and DL beams may be aligned. A default TCI state of a PDSCH may be updated to match to a default UL beam (spatial relation).

By beam management based on DCI (DCI level beam indication), a common beam/unified TCI state may be indicated from the same TCI pool (joint common TCI pool, joint TCI pool, set) for both UL and DL. X (>1) TCI states may be activated by a MAC CE. UL/DL DCI may select one from the X active TCI states. The selected TCI state may be applied to channels/RSs of both UL and DL.

The TCI pool (set) may be a plurality of TCI states configured by an RRC parameter or a plurality of TCI states (active TCI states, active TCI pool, set) activated by a MAC CE among the plurality of TCI states configured by the RRC parameter. Each TCI state may be a QCL type A/D RS. As the QCL type A/D RS, an SSB, a CSI-RS, or an SRS may be configured.

The number of TCI states corresponding to each of one or more TRPs may be defined. For example, the number N (≥1) of TCI states (UL TCI states) applied to a UL channel/RS and the number M (≥1) of TCI states (DL TCI states) applied to a DL channel/RS may be defined. At least one of N and M may be notified/configured/indicated for the UE via higher layer signaling/physical layer signaling.

In the present disclosure, description "N = M = X (X is any integer)" may mean that X TCI states (joint TCI states) (corresponding to X TRPs) common to UL and DL are notified/configured/indicated for the UE. Description "N = X (X is any integer), M = Y (Y is any integer, Y may equal X)" may mean that X UL TCI states (corresponding to X TRPs) and Y DL TCI states (corresponding to Y TRPs) (in other words, separate TCI states) are each notified/configured/indicated for the UE.

For example, description "N = M = 1" may mean that one TCI state common to UL and DL is notified/configured/indicated for the UE, the TCI state being for a single TRP (joint TCI state for a single TRP).

For example, description "N = 1, M = 1" may mean that one UL TCI state and one DL TCI state for a single TRP are separately notified/configured/indicated for the UE (separate TCI state for a single TRP).

For example, description "N = M = 2" may mean that a plurality of (two) TCI states common to UL and DL are notified/configured/indicated for the UE, the plurality of TCI states being for a plurality of (two) TRPs (joint TCI states for multiple TRPs).

For example, description "N = 2, M = 2" may mean that a plurality of (two) UL TCI states and a plurality of (two) DL TCI states for a plurality of (two) TRPs are notified/configured/indicated for the UE (separate TCI states for multiple TRPs).

Note that in the above examples, cases where N and M values are 1 or 2 are described, but the N and M values may be 3 or more, and N and M may be different from each other.

For Rel. 17, support of N = M = 1 is under study. For example, indication of one common beam using RRC/MAC CE/DCI may be supported, and the one common beam may be applied to a plurality of DL/UL channels/reference signals. For Rel. 18 or later versions, another case may be supported.

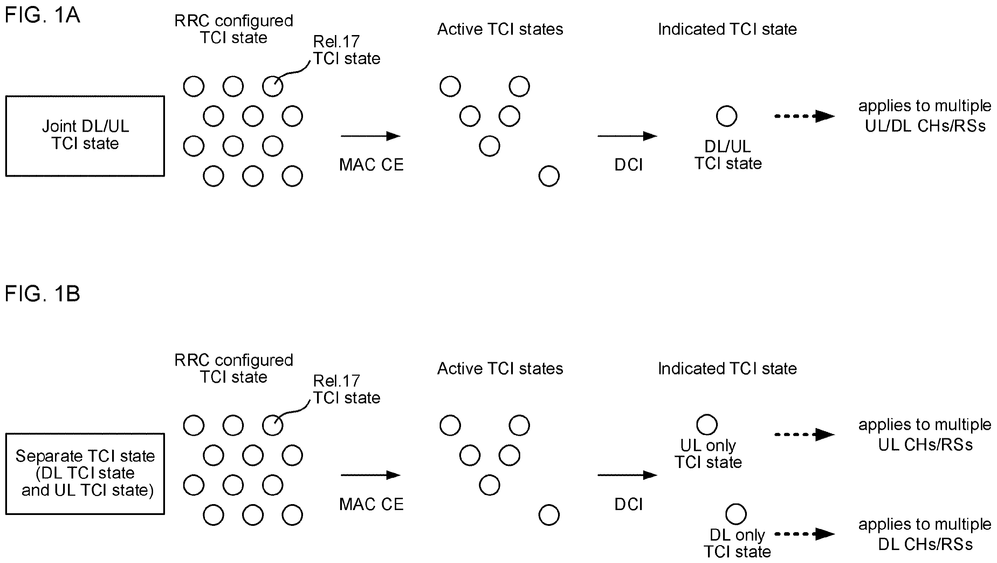

FIG. 1A and FIG. 1B show examples of the unified TCI framework. FIG. 1A and FIG. 1B show an example of a joint DL/UL TCI state and an example of a separate TCI state (DL TCI state and UL TCI state), respectively.

In the example in FIG. 1A, an RRC parameter (information element) configures a plurality of TCI states for both DL and UL. In the present disclosure, the TCI states configured by the RRC parameter may be referred to as configured TCI states. The MAC CE may activate a plurality of TCI states among the plurality of configured TCI states. DCI may indicate one of the plurality of activated TCI states. In the present disclosure, the TCI state indicated by the DCI may be referred to as an indicated TCI state.

The DCI may be UL DCI (for example, DCI used to schedule a PUSCH) or DL DCI (for example, DCI used to schedule a PDSCH). The indicated TCI state may be applied to at least one (or all) of UL/DL channels/RSs. One piece of DCI may indicate both a UL TCI and a DL TCI.

In the example in FIG. 1A, one dot may be one TCI state applied to both UL and DL or may be two respective TCI states applied to UL and DL.

At least one of the plurality of TCI states configured by the RRC parameter and the plurality of TCI states activated by the MAC CE may be referred to as a TCI pool (common TCI pool, joint TCI pool, TCI state pool). The plurality of TCI states activated by the MAC CE may be referred to as an active TCI pool (active common TCI pool).

Note that, in the present disclosure, a higher layer parameter (RRC parameter) that configures a plurality of TCI states may be referred to as configuration information that configures a plurality of TCI states or simply as "configuration information." In the present disclosure, one of a plurality of TCI states being indicated by using DCI may be receiving indication information indicating one of a plurality of TCI states included in DCI or may simply be receiving "indication information."

In the example in FIG. 1B, an RRC parameter configures a plurality of TCI states for both DL and UL (joint common TCI pool). A MAC CE may activate a plurality of TCI states (active TCI pool) among the plurality of configured TCI states. Respective (different, separate) active TCI pools for UL and DL may be configured/activated.

DL DCI or a new DCI format may select (indicate) one or more (for example, one) TCI states. The selected TCI state(s) may be applied to one or more (or all) DL channels/RSs. The DL channel(s) may be a PDCCH/PDSCH/CSI-RS(s). The UE may determine the TCI state of each of the DL channels/RSs by using operation of a TCI state (TCI framework) of Rel. 16. UL DCI or a new DCI format may select (indicate) one or more (for example, one) TCI states. The selected TCI state(s) may be applied to one or more (or all) UL channels/RSs. The UL channel(s) may be a PUSCH/SRS/PUCCH(s). Thus, different pieces of DCI may indicate a UL TCI and a DL DCI separately.

In Rel-17 NR (or later versions), it is assumed that beam activation/indication for TCI states associated with different physical cell identifiers (PCIs) is supported by a MAC CE/DCI. In Rel-18 NR (or later versions), it is assumed that indication of serving cell change for cells including different PCIs is supported by a MAC CE/DCI.

The TCI state (for example, joint DL/UL TCI state) configuration/indication method of FIG. 1A and the TCI state (for example, separate TCI state) application configuration/indication method of FIG. 1B may be switched to each other and may be applied. Which of the joint DL/UL TCI state or the separate TCI state is to be applied may be configured from a base station to the UE via a higher layer parameter.

### (TCI State Indication)

A Rel-17 unified TCI framework supports Modes 1 to 3 below.
{Mode 1} MAC CE based TCI state indication
{Mode 2} DCI based TCI state indication with DL assignment (DCI based TCI state indication by DCI format 1_1/1_2 with DL assignment)
{Mode 3} DCI based TCI state indication without DL assignment (DCI based TCI state indication by DCI format 1_1/1_2 without DL assignment)

The UE with a TCI state configured and activated with a Rel-17 TCI state ID (for example, tci-StateId_r17) receives DCI format 1_1/1_2 for providing an indicated TCI state with the Rel-17 TCI state ID, for one CC, or receives DCI format 1_1/1_2 for providing an indicated TCI state with the Rel-17 TCI state ID, for all the CCs in the same CC list as a CC list configured by simultaneous TCI update list 1 or simultaneous TCI update list 2 (for example, simultaneousTCI-UpdateList1 or simultaneousTCI-UpdateList2). DCI format 1_1/1_2 may be accompanied by DL assignment, if available, or may not be accompanied by DL assignment.

If DCI format 1_1/1 2 is not accompanied by DL assignment, the UE can assume (validate), for the DCI, the following.
- A CS-RNTI is used to scramble a CRC for the DCI.
- Values of the following DCI fields (special fields) are set as follows:
   - redundancy version (RV) fields are all '1's
   - modulation and coding scheme (MCS) fields are all '1's
   - a new data indicator (NDI) field is 0
   - frequency domain resource assignment (FDRA) fields are all '0's for FDRA type 0, are all '1's for FDRA type 1, or are all '0's for dynamic switching (DynamicSwitch) (as with validation of a PDCCH with a DL semi-persistent scheduling (SPS) release or a UL grant type 2 scheduling release).

Note that the DCI in mode 2/mode 3 may be referred to as beam indication DCI.

In Rel. 15/16, if the UE does not support active BWP change via DCI, the UE ignores a BWP indicator field. Such operation is also under study for a relationship between support of a Rel-17 TCI state and interpretation of a TCI field. It is studied that if the UE is configured with a Rel-17 TCI state, a TCI field is always present in DCI format 1_1/1_2 and that if the UE does not support TCI update via DCI, the UE ignores a TCI field.

In Rel. 15/16, whether a TCI field is present (TCI-in-DCI presence information, "tci-PresentInDCI") is configured for each CORESET.

The TCI field in DCI format 1_1 is 0 bit in a case where a higher layer parameter "tci-PresentInDCI" is not enabled, and is 3 bits in a case other than the case. If the BWP indicator field indicates a BWP other than an active BWP, the UE follows the following operation.
{Operation} If a higher layer parameter "tci-PresentInDCI" is not enabled for a CORESET used for a PDCCH for communicating that DCI format 1_1, the UE assumes that "tci-PresentInDCI" is not enabled for all the CORESETs in the indicated BWP, otherwise the UE assumes that "tci-PresentInDCI" is enabled for all the CORESETs in the indicated BWP.

The TCI field in DCI format 1_2 is 0 bit in a case where a higher layer parameter "tci-PresentInDCI-1-2" is not configured, and is 1, 2, or 3 bits determined by the higher layer parameter "tci-PresentInDCI-1-2" in a case other than the case. If the BWP indicator field indicates a BWP other than an active BWP, the UE follows the following operation.
{Operation} If a higher layer parameter "tci-PresentInDCI-1-2" is not configured for a CORESET used for a PDCCH for communicating that DCI format 1_2, the UE assumes that "tci-PresentInDCI" is not enabled for all the CORESETs in the indicated BWP, otherwise the UE assumes that "tci-PresentInDCI-1-2" is configured with the same value as that of "tci-PresentInDCI-1-2" configured for the CORESET used for the PDCCH for communicating that DCI format 1_2, for all the CORESETs in the indicated BWP.

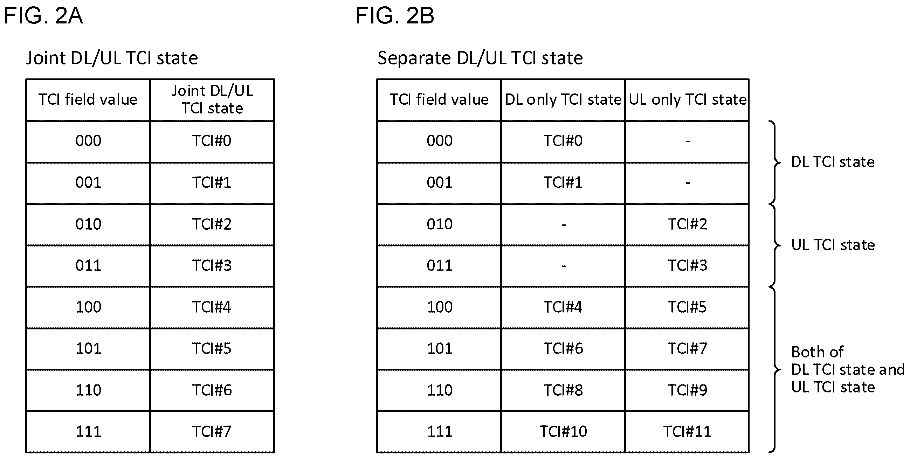

FIG. 2A shows an example of DCI based joint DL/UL TCI state indication. A TCI state ID indicating a joint DL/UL TCI state is associated with a TCI field value for the joint DL/UL TCI state indication.

FIG. 2B shows an example of DCI based separate DL/UL TCI state indication. At least one of a TCI state ID indicating a DL-only TCI state and a TCI state ID indicating a UL-only TCI state is associated with a TCI field value for the separate DL/UL TCI state indication. In this example, TCI field values "000" to "001" are associated with only one TCI state ID for DL, TCI field values "010" to "011" are associated with only one TCI state ID for UL, and TCI field values "100" to "111" are associated with both one TCI state ID for DL and one TCI state ID for UL.

### (Indicated TCI State/Configured TCI State)

For a Rel-17 TCI state, a unified/common TCI state may mean a Rel-17 TCI state indicated by using DCI/MAC CE/RRC (of Rel. 17) (indicated Rel-17 TCI state).

In the present disclosure, an indicated Rel-17 TCI state, an indicated TCI state, a unified/common TCI state, a TCI state applied to a plurality of types of signals (channels/RSs), and a TCI state for a plurality of types of signals (channels/RSs) may be interchangeably interpreted.

The indicated Rel-17 TCI state may be shared with at least one of UE-specific reception in a PDSCH/PDCC (updated by using DCI/MAC CE/RRC of Rel. 17), a dynamic grant (DCI)/configured grant PUSCH, and a plurality of (for example, all the) dedicated PUCCH resources. A TCI state indicated by DCI/MAC CE/RRC may be referred to as an indicated TCI state or a unified TCI state.

For the Rel-17 TCI state, a TCI state other than the unified TCI state may mean a Rel-17 TCI state configured by using a MAC CE/RRC (of Rel. 17) (configured Rel-17 TCI state). In the present disclosure, a configured Rel-17 TCI state, a configured TCI state, a TCI state other than a unified TCI state, and a TCI state applied to a signal (channel/RS) of a specific type may be interchangeably interpreted.

The configured Rel-17 TCI state may not be shared with at least one of UE-specific reception in a PDSCH/PDCC (updated by using DCI/MAC CE/RRC of Rel. 17), a dynamic grant (DCI)/configured grant PUSCH, and a plurality of (for example, all the) dedicated PUCCH resources. The configured Rel-17 TCI state may be configured by RRC/MAC CE for each CORESET/each resource/each resource set, and may not be updated even when the above-described indicated Rel-17 TCI state (common TCI state) is updated.

### (Channel/RS to Which Indicated TCI State Is Applied)

An indicated TCI state with a MAC CE/DCI may be applied to the following channels/RSs.

### {PDCCH}

- When followUnifiedTCIState is configured (unified TCI state is configured to be followed) for CORESET 0, the indicated TCI state is applied to the CORESET. Otherwise, a Rel-15 specification is applied to the CORESET. In other words, CORESET 0 follows a TCI state activated by the MAC CE, or is QCLed with an SSB.
- The indicated TCI state is always applied to a CORESET with USS/CSS type 3 and with an index other than index 0.
- When a unified TCI state is configured to be followed for a CORESET with at least a CSS of a type other than CSS type 3 and with an index other than index 0, the indicated TCI state is applied to the CORESET. Otherwise, a configured TCI state for the CORESET is applied to the CORESET.

### {PDSCH}

- The indicated TCI state is always applied to all the UE-dedicated PDSCHs.
- When followUnifiedTCIState is configured for a non-UE-dedicated PDSCH (PDSCH scheduled by DCI in a CSS) (for a CORESET of a PDCCH for scheduling the PDSCH), the indicated TCI state may be applied to the PDSCH. Otherwise, a configured TCI state for the PDSCH is applied to the PDSCH. When followUnifiedTCIState is not configured for a PDSCH, whether a non-UE-dedicated PDSCH follows the indicated TCI state may be determined depending on whether followUnifiedTCIState is configured for a CORESET used to schedule the PDSCH.

### {CSI-RS}

- When followUnifiedTCIState is configured for an A-CSI-RS for CSI acquisition or beam management (for a CORESET of a PDCCH for triggering the A-CSI-RS), the indicated TCI state is applied to the A-CSI-RS. A configured TCI state for the CSI-RS is applied to another CSI-RS.

### {PUCCH}

- The indicated TCI state is always applied to all the dedicated PUCCH resources.

### {PUSCH}

The indicated TCI state is always applied to a dynamic/configured grant PUSCH.

### {SRS}

- When a unified TCI state is configured to be followed for an SRS resource set for an A-SRS for beam management use and an A/SP/P-SRS for codebook (CB)/non-codebook (NCB)/antenna switching use, the indicated TCI state is applied to the SRS resource set. A configured TCI state in the SRS resource set is applied to another SRS.

### (TCI State Switching)

In Rel. 15/16, a delay time for active TCI state switching is defined, the delay time being for a UE configured with one or more TCI states in a serving cell.

Even when the UE measures/stores/holds the QCL property, unless the UE performs L1-RSRP reporting/beam reporting to a network (NW, for example, a base station), the NW fails to recognize whether the UE measures/stores/holds the QCL property. Thus, the UE is required to perform measurement and reporting of a beam/RS to share common recognition of whether a TCI state is known or unknown with the UE and NW.

In Rel. 16, the TCI state being known is condition 0 to condition 5 below being satisfied:
(Condition 0): From the last transmission of an RS resource used to report L1-RSRP measurement for a target TCI state until completion of active TCI state switching, the RS resource for the L1-RSRP measurement is an RS in the target TCI state or an RS having a QCL relationship with the target TCI state;
(Condition 1): A TCI state switch indication (TCI state switch command) is received within 1280 ms from the last transmission of an RS resource for beam reporting or measurement;
(Condition 2): The UE transmits at least one L1-RSRP report for the target TCI state before the TCI state switch indication;
(Condition 3): During the TCI state switching, detection of the TCI state remains available;
(Condition 4): During the TCI state switching, detection of an SSB associated with the TCI state remains available; and
(Condition 5): A Signal to Noise Ratio (SNR) of the TCI state is -3 dB or more.

The TCI state being unknown means that the TCI state not being known.

Note that, in the present disclosure, the TCI state being known and the TCI state being unknown may be referred to as a "known TCI state" and an "unknown TCI state," respectively.

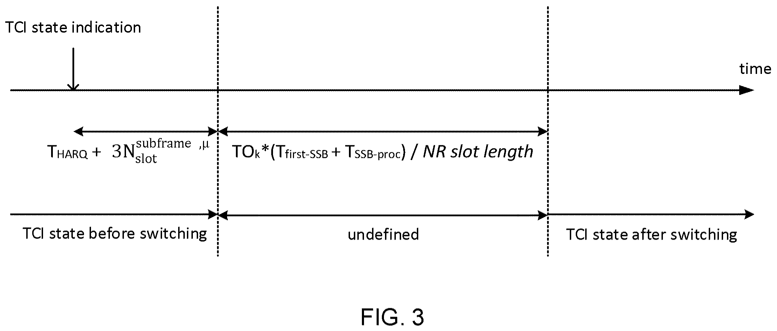

When a MAC CE is used for the TCI state switching (MAC-CE based TCI state switch), and the target TCI state (TCI state as a switching target) is a known TCI state, in response to the UE receiving, in slot n, a physical downlink shared channel (PDSCH) including a TCI state activation command (TCI state indication), the UE receives, in the first slot after slot n + T_{HARQ} + 3N^{subframe,µ}slot + TOₖ * (T_{first-SSB} + T_{SSB-proc})/(NR slot length), a physical downlink control channel (PDCCH) with the target TCI state for a serving cell in which the TCI state switching has occurred. The UE can receive the PDCCH with a previous TCI state (before the switching) until slot n + T_{HARQ} + 3N^{subframe,µ}ₛₗₒₜ. In a period from slot n + T_{HARQ} + 3N^{subframe,µ}ₛₗₒₜ until slot n + T_{HARQ} + 3N^{subframe,µ}ₛₗₒₜ + TOₖ * (T_{first-SSB} + T_{SSB-proc})/(NR slot length), a TCI state to be applied by the UE is undefined (see FIG. 3).

Here, T_{HARQ} represents a time from downlink data signal (for example, PDSCH) transmission to transmission confirmation information (for example, HARQ-ACK information). N^{subframe,µ}ₛₗₒₜ represents the number of slots per subframe for subcarrier configuration µ. T_{first-SSB} is a time for the UE to transmit an SSB first after decoding a MAC CE command used for TCI state activation. T_{SSB-proc} is 2 ms. TOₖ is 1 when the target TCI state is not included in a list of active TCI states for the PDSCH, otherwise TOₖ is 0. NR slot length represents a slot length.

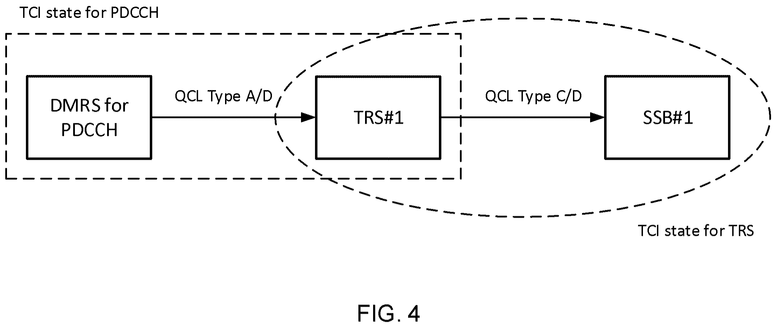

FIG. 4 is a diagram to show an example of the TCI state defined in Rel. 16 or earlier versions. As shown in FIG. 4, a TCI state for PDCCH indicates a relationship of QCL type A/D between a demodulation reference signal (DMRS) for PDCCH and a TRS (or a CSI-RS, here, TRS #1). A TCI state for TRS indicates a relationship of QCL type C/D between the TRS and an SSB (here, SSB #1).

When a MAC CE is used for the TCI state switching, and the target TCI state is an unknown TCI state, in response to the UE receiving, in slot n, a PDSCH including a TCI state activation command, the UE receives, in the first slot after slot n + T_{HARQ} + 3N^{subframe,µ}ₛₗₒₜ + T_{L1-RSRP} + TOᵤₖ * (T_{first-SSB} + T_{SSB-proc})/(NR slot length), a PDCCH with the target TCI state for a serving cell in which the TCI state switching has occurred. The UE can receive the PDCCH with a previous TCI state (before the switching) until slot n + T_{HARQ} + 3N^{subframe,µ}ₛₗₒₜ.

Here, TOᵤₖ is 1 for L1-RSRP measurement using the CSI-RS or for TCI state switching configured with a QCL type other than QCL type D. On the other hand, TOᵤₖ is 0 for TCI state switching configured with at least QCL type D and for L1-RSRP measurement using the SSB.

T_{first-SSB} is a time to transmit an SSB first after L1-RSRP measurement in a case where TCI state switching configured with at least QCL type D is performed. Alternatively, T_{first-SSB} is a time for the UE to transmit an SSB first after decoding a MAC CE command used for TCI state activation configured with a QCL type other than QCL type D.

Compared to the target TCI state being a known TCI state, the target TCI state being an unknown TCI state requires an additional time of T_{L1-RSRP} for the TCI state switching. T_{L1-RSRP} is a time related to received power measurement. T_{L1-RSRP} is 0 in a case of frequency range (FR)1 or in a case of FR2 not configured with QCL type D. Otherwise, T_{L1-RSRP} is a time required for determination/refinement of a receive beam in FR2.

When downlink control information (DCI) is used for the TCI state switching (DCI based TCI state switch), and the target TCI state is a known TCI state, in response to a higher layer parameter "tci-PresentInDCI" for a CORESET for scheduling a PDSCH being configured as "enabled" for the UE in slot n, the UE receives, in the first slot after slot n + timeDurationForDCI, a PDSCH with the target TCI state for a serving cell in which the TCI state switching has occurred. Here, timeDurationForDCI is a time required for reception of a PDCCH and application of spatial relation/QCL-related information (spatial QCL information) to reception of DCI for a PDSCH.

Furthermore, when RRC signaling is used for the TCI state switching (RRC based TCI state switch), and the target TCI state is a known TCI state, in response to the UE receiving, in slot n, a PDSCH for transmitting an RRC activation command for TCI state, the UE receives, in the first slot after slot n + (T_{RRC_processing} + TOₖ * (T_{first-SSB} + T_{SSB-proc}))/(NR slot length), a PDCCH with the target TCI state for a serving cell in which the TCI state switching has occurred.

Here, T_{RRC_processing} is a delay related to RRC processing (RRC processing delay). T_{first-SSB} is a time to transmit an SSB first after RRC processing by the UE. T_{SSB-proc}, TOₖ, and (NR slot length) are similar to those of the case of the known TCI state in the TCI state switching using the MAC CE.

When RRC signaling is used for the TCI state switching (RRC based TCI state switch), and the target TCI state is an unknown TCI state, in response to the UE receiving, in slot n, a PDSCH for transmitting an RRC activation command for TCI state, the UE receives, in the first slot after slot n + (T_{RRC_processing} + T_{L1-RSRP} + TOᵤₖ * (T_{first-SSB} + T_{SSB-proc}))/(NR slot length), a PDCCH with the target TCI state for a serving cell in which the TCI state switching has occurred.

Here, T_{RRC_processing} is a delay related to RRC processing (RRC processing delay). T_{SSB-procr} TOᵤₖ, and (NR slot length) are similar to those of the case of the unknown TCI state in the TCI state switching using the MAC CE.

T_{first-SSB} is a time to transmit an SSB first after L1-RSRP measurement in a case where TCI state switching configured with at least QCL type D is performed. Alternatively, T_{first-SSB} is a time for the UE to transmit an SSB first after decoding a MAC CE command used for TCI state activation configured with a QCL type other than QCL type D.

In Rel. 17, a delay time for switching related to a unified TCI state is defined.

For example, when the UE is configured with an RRC parameter (DLorJoint-TCIState) related to a unified TCI state, for a DL channel of a serving cell, the defined delay time may be applied.

In MR-DC or stand-alone NR, the delay time is also applied to all lists of a plurality of serving cells in a simultaneous TCI update list (for example, simultaneousU-TCI-UpdateList1, simultaneousU-TCI-UpdateList2, simultaneousU-TCI-UpdateList3, or simultaneousU-TCI-UpdateList4) in a plurality of CCs/cells.

When a target DL TCI state refers to an additional physical cell ID (PCI) different from a PCI of a serving cell configured with this DL TCI state, the delay time may be applied under the condition that the following conditions are satisfied:
- the serving cell and a cell having the additional PCI have the same active BWP;
- a center frequency, a subcarrier spacing (SCS), and a system frame number (SFN) offset of the cell having the additional PCI are the same as those of the serving cell; and
- the cell having the additional PCI is known to the UE.

The cell having the additional PCI may be known when the following conditions are satisfied:
- the UE transmits a valid L3 measurement report for the cell having the additional PCI in the last 5 seconds before configuration of L1-RSRP measurement; and
- a timing offset between the serving cell and the cell having the additional PCI is within a CP having a corresponding SCS.

When these conditions are not satisfied, the cell having the additional PCI may be unknown.

The DL TCI state in the unified TCI state being known may be the following conditions being satisfied:
- from the last transmission of an RS resource used to report L1-RSRP measurement for the target DL TCI state until completion of active DL TCI state switching, the RS resource for the L1-RSRP measurement is an RS in the target DL TCI state or an RS having a QCL relationship with the target DL TCI state;
- a DL TCI state switch indication (downlink TCI state switch command) is received within 1280 ms from the last transmission of an RS resource for beam reporting or measurement;
- the UE transmits at least one L1-RSRP report for the target DL TCI state before the DL TCI state switch indication;
- during the DL TCI state switching, detection of the DL TCI state remains available;
- during the DL TCI state switching, detection of an SSB associated with the DL TCI state remains available; and
- a Signal to Noise Ratio (SNR) of the DL TCI state is -3 dB or more.

The SSB may be associated with the PCI of the serving cell or a PCI different from the serving cell PCI.

When the conditions above are not satisfied, the DL TCI state may be unknown.

In a case of joint TCI state switching, unless a target PL-RS is maintained, the UE may not be expected to perform DL reception based on a target TCI state before completion of switching of DL and UL TCI states.

When a MAC CE is used for the DL TCI state switching (MAC-CE based downlink TCI state switch), and the target TCI state (TCI state as a switching target) is a known TCI state, in response to the UE receiving, in slot n, a PDSCH including a TCI state activation command (TCI state indication), the UE receives, in the first slot after slot n + T_{HARQ} + 3N^{subframe,µ}ₛₗₒₜ + TOₖ * (T_{first-SSB} + T_{SSB-proc})/(NR slot length), a physical downlink control channel (PDCCH) with the target TCI state for a serving cell in which the TCI state switching has occurred. The UE can receive a UE-dedicated PDSCH/PDCCH by using a previous TCI state (before the switching) until slot n + T_{HARQ} + 3N^{subframe,µ}ₛₗₒₜ. In a period from slot n + T_{HARQ} + 3N^{subframe,µ}ₛₗₒₜ until slot n + T_{HARQ} + 3N^{subframe,µ}ₛₗₒₜ + TOₖ * (T_{first-SSB} + T_{SSB-proc})/(NR slot length), a TCI state to be applied by the UE is undefined.

Here, T_{HARQ} represents a time from downlink data signal (for example, PDSCH) transmission to transmission confirmation information (for example, HARQ-ACK information). N^{subframe,µ}ₛₗₒₜ represents the number of slots per subframe for subcarrier configuration µ. T_{first-SSB} is a time for the UE to transmit an SSB first after decoding a MAC CE command used for TCI state activation. T_{SSB-proc} is 2 ms. TOₖ is 1 when the target TCI state is not included in a list of active TCI states for the PDSCH, otherwise TOₖ is 0. NR slot length represents a slot length.

When a MAC CE is used for the DL TCI state switching, and the target TCI state is an unknown TCI state, in response to the UE receiving, in slot n, a PDSCH including a TCI state activation command, the UE receives, in the first slot after slot n + T_{HARQ} + 3N^{subframe,µ}ₛₗₒₜ + T_{L1-RSRP} + TOᵤₖ * (T_{first-SSB} + T_{SSB-proc})/(NR slot length), a PDCCH with the target TCI state for a serving cell in which the TCI state switching has occurred. The UE can receive a UE-dedicated PDSCH/PDCCH by using a previous TCI state (before the switching) until slot n + T_{HARQ} + 3N^{subframe,µ}ₛₗₒₜ.

Here, TOᵤₖ is 1 for L1-RSRP measurement using the CSI-RS or for TCI state switching configured with a QCL type other than QCL type D. On the other hand, TOᵤₖ is 0 for TCI state switching configured with at least QCL type D and for L1-RSRP measurement using the SSB.

T_{first-SSB} is a time to transmit an SSB first after L1-RSRP measurement in a case where TCI state switching configured with at least QCL type D is performed. Alternatively, T_{first-SSB} is a time for the UE to transmit an SSB first after decoding a MAC CE command used for TCI state activation configured with a QCL type other than QCL type D.

Compared to the target TCI state being a known TCI state, the target TCI state being an unknown TCI state requires an additional time of T_{L1-RSRP} for the TCI state switching. T_{L1-RSRP} is a time related to received power measurement. T_{L1-RSRP} is 0 in a case of frequency range (FR)1 or in a case of FR2 not configured with QCL type D. Otherwise, T_{L1-RSRP} is a time required for determination/refinement of a receive beam in FR2.

For example, when the UE is configured with an RRC parameter (DLorJoint-TCIState (when unifiedTCI-StateType indicates Joint) or UL-TCIState) related to a unified TCI state, for a UL channel/signal of a serving cell, the defined delay time may be applied.

In MR-DC or stand-alone NR, the delay time is also applied to all lists of a plurality of serving cells in a simultaneous TCI update list (for example, simultaneousU-TCI-UpdateList1, simultaneousU-TCI-UpdateList2, simultaneousU-TCI-UpdateList3, or simultaneousU-TCI-UpdateList4) in a plurality of CCs/cells.

For the UL TCI state (or joint TCI state), a known/unknown state of a cell having an additional PCI and a known/unknown state of the UL TCI state are the same as those obtained by interpreting, as "UL TCI state (or joint TCI state)," "DL TCI state" with the known/unknown states of the cell having the additional PCI and the TCI state for the DL TCI state above.

In a case of joint TCI state switching, the UE may not be expected to perform UL transmission before completion of switching of DL and UL TCI states.

When a MAC CE is used for switching of a separate UL TCI state/joint TCI state for the UL channel/signal (MAC-CE based uplink TCI state switch), and the target TCI state (TCI state as a switching target) is a known TCI state, in response to the UE receiving, in slot n, a PDSCH including a TCI state activation command (TCI state indication), the UE can transmit, in slot n + T_{HARQ} + 3N^{subframe,µ}ₛₗₒₜ + NM * (T_{first-target-PL-RS} + 4 * T_{target-PL-RS} + 2ms)/(NR slot length), a UL signal with the target TCI state. Here, the UL channel/signal may be a PUCCH, a PUSCH, or a semi-persistent/periodic/aperiodic SRS (when beamCorrespondenceWithoutUL-BeamSweeping is set to 1).

When a MAC CE is used for switching of a separate UL TCI state/joint TCI state for the UL channel/signal, and the target TCI state is an unknown TCI state, in response to the UE receiving, in slot n, a PDSCH including a TCI state activation command (TCI state indication), the UE can transmit, in slot n + T_{HARQ} + 3N^{subframe,µ}ₛₗₒₜ + (T_{L1-RSRP} + T_{first-target-PL-RS} + 4 * T_{target-PL-RS} + 2ms)/(NR slot length), a UL signal with the target TCI state.

Here, T_{HARQ} represents a time from downlink data signal (for example, PDSCH) transmission to transmission confirmation information (for example, HARQ-ACK information). N^{subframe,µ}ₛₗₒₜ represents the number of slots per subframe for subcarrier configuration µ. NR slot length represents a slot length.

NM is 1 when a target PL-RS is maintained, otherwise NM is 0.

When the target TCI state is unknown, T_{target-PL-RS} is a time to transmit a path loss RS first after L1-RSRP measurement. When the target TCI state is known, T_{target-PL-RS} is a time to transmit a path loss RS first after the UE decodes a MAC CE command.

When the PL-RS is associated with a serving cell, T_{target-PL-RS} is a periodicity of the target PL-RS being an SSB or an NZP CSI-RS. When the PL-RS is associated with a PCI different from that of the serving cell, T_{target-PL-RS} is a periodicity of the PL-RS serving as an SSB.

Compared to the target TCI state being a known TCI state, the target TCI state being an unknown TCI state requires an additional time of T_{L1-RSRP} for the TCI state switching. T_{L1-RSRP} is a time related to received power measurement. T_{L1-RSRP} is 0 in a case of frequency range (FR)1 or in a case of FR2 not configured with QCL type D. Otherwise, T_{L1-RSRP} is a time required for determination/refinement of a receive beam in FR2.

### (Analysis)

For future radio communication systems (Rel. 18/19 or later versions), support of beam reporting based on an event is under study. The beam reporting based on an event may be referred to as event-triggered beam reporting, and may mean UE-initiated beam reporting.

For a unified TCI framework defined in Rel. 17/18, support of an operation mode related to joint (DL/UL) TCI and an operation mode related to separate (DL/UL) TCI is under study.

Considering a maximum permitted exposure (MPE) problem in UL, quality of a UL beam may depend on at least one of received power (for example, RSRP) and a factor associated with MPE (for example, power-management maximum power reduction (P-MPR)).

In UE-initiated beam reporting/switching, a UE may determine independent (different) statuses in DL and UL.

For example, in UE-initiated beam reporting/switching, the UE may determine different new beam for DL and new beam for UL. For example, update of a DL beam may not be required, and update of a UL beam may be required for the MPE problem.

Meanwhile, for some cases, studies have not been sufficiently made on UE-initiated beam reporting/switching considering the operation mode related to joint/separate TCI.

It is studied that the multi-TRP framework introduced in Rel. 16 is also supported in Rel. 18.

Meanwhile, studies have not been sufficiently made on a method for UE-initiated event-triggered beam reporting/switching in the multi-TRP framework.

For Rel. 16/17, DL group-based beam reporting has been studied and has been supported. In the group-based beam reporting, a pair of beams to be reported may be a pair of beams to be received simultaneously.

For Rel. 18 or later versions, introduction/support of UL group-based beam reporting is under study. It is studied that, for the UL group-based beam reporting, a plurality of modes are defined.

For example, it is studied that, for a pair of beams to be reported, a mode is defined in which UL transmission spatial filters determined based on the pair of beams to be reported are simultaneously applied and the pair of beams to be reported are simultaneously received.

For example, it is also studied that, for a pair of beams to be reported, a mode is defined in which UL transmission spatial filters determined based on the pair of beams to be reported are simultaneously applied.

Meanwhile, studies have not been sufficiently made on a method for UE-initiated event-triggered beam reporting/switching in the group-based beam reporting.

Unless these studies are sufficient, low-latency communication with appropriate beam reporting/switching cannot be implemented, which may cause suppressing of communication quality/throughput enhancement.

Thus, the inventors of the present invention came up with the idea of a method of resolving these problems.

Embodiments according to the present disclosure will be described in detail with reference to the drawings as follows. The radio communication methods according to respective embodiments may each be employed individually, or may be employed in combination.

In the present disclosure, "A/B" and "at least one of A and B" may be interchangeably interpreted. In the present disclosure, "A/B/C" may mean "at least one of A, B, and C."

In the present disclosure, notify, activate, deactivate, indicate, select, configure, update, determine, and the like may be interchangeably interpreted. In the present disclosure, "support," "control," "controllable," "operate," "operable," and the like may be interchangeably interpreted.

In the present disclosure, radio resource control (RRC), an RRC parameter, an RRC message, a higher layer parameter, a field, an information element (IE), a configuration, and the like may be interchangeably interpreted. In the present disclosure, a Medium Access Control control element (MAC Control Element (CE)), an update command, an activation/deactivation command, and the like may be interchangeably interpreted.

In the present disclosure, the higher layer signaling may be, for example, any one or combinations of Radio Resource Control (RRC) signaling, Medium Access Control (MAC) signaling, broadcast information, other messages (for example, a message from the core network, such as positioning protocol (for example, NR Positioning Protocol A (NRPPa)/LTE Positioning Protocol (LPP)) messages), and the like.

In the present disclosure, the MAC signaling may use, for example, a MAC control element (MAC CE), a MAC Protocol Data Unit (PDU), or the like. The broadcast information may be, for example, a master information block (MIB), a system information block (SIB), minimum system information (Remaining Minimum System Information (RMSI)), other system information (OSI), or the like.

In the present disclosure, the physical layer signaling may be, for example, downlink control information (DCI), uplink control information (UCI), or the like.

In the present disclosure, omit, drop, stop, cancel, puncture, rate match, postpone, not transmit, and the like may be interchangeably interpreted.

In the present disclosure, a beam, a TCI state, TCI, an SRI, a spatial relation, a spatial domain transmission/reception parameter, QCL, a reference signal, an SSB, a CSI-RS, an SRS, and the like may be interchangeably interpreted.

In the present disclosure, a TRP, a CORESET pool, a CORESET group, an SRS resource set, an SRS group, a CSI-RS resource set, a CSI-RS group, a beam group, a TCI group, a PUCCH spatial relation group, an SRS spatial relation group, an SSB group, a pathloss RS group, and the like may be interchangeably interpreted.

In the present disclosure, multi-TRP (a plurality of TRPs), a multi-TRP system, multi-TRP transmission, and multi-PDSCH may be interchangeably interpreted.

In the present disclosure, single DCI, a single PDCCH, multi-TRP based on single DCI, two TCI states in at least one TCI codepoint being activated, at least one codepoint of a TCI field being mapped to two TCI states, a specific index (for example, a TRP index, a CORESET pool index, or an index corresponding to a TRP) being configured for a specific channel/CORESET may be interchangeably interpreted.

In the present disclosure, a single TRP, a channel/signal using a single TRP, a channel using one TCI state/spatial relation, multi-TRP being not enabled by RRC/DCI, a plurality of TCI states/spatial relations being not enabled by RRC/DCI, and one CORESET pool index (CORESETPoolIndex) value being not configured for any CORESET and any codepoint of a TCI field being not mapped to two TCI states may be interchangeably interpreted.

In the present disclosure, TRP #1 (first TRP) may correspond to CORESET pool index = 0 or may correspond to the first TCI state of two TCI states corresponding to one codepoint of a TCI field. TRP #2 (second TRP) TRP #1 (first TRP) may correspond to CORESET pool index = 1 or may correspond to the second TCI state of two TCI states corresponding to one codepoint of a TCI field.

In the present disclosure, single DCI (sDCI), a single PDCCH, a multi-TRP system based on single DCI, sDCI-based MTRP, and two TCI states in at least one TCI codepoint being activated may be interchangeably interpreted.

### (Radio Communication Method)

In the present disclosure, event-triggered beam reporting may be simply referred to as beam reporting/CSI reporting/L1 beam reporting.

Respective embodiments/options in the present disclosure may each be used individually, or two or more of the embodiments/options may be used in combination. The respective embodiments/options in the present disclosure may be switched by using higher layer signaling (RRC/MAC CE) or may be configured/indicated based on reported UE capability information.

### <Zero-th Embodiment>

Each embodiment of the present disclosure may be applied, for example, in at least one of case 1 and case 2 below:
- {Case 1}: An L1-RSRP/SINR beam report including a serving cell PCI/additional PCI (for example, an L1-RSRP/SINR beam report including a serving cell/additional cell PCI for Rel-18 L1/L2 mobility with L1/L2 inter-cell mobility/intra-cell multi-TRP (M-TRP inter-cell)/cell switching).
- {Case 2}: An L1-RSRP/SINR beam report including only a serving cell PCI.

In a case of occurrence of a specific event (in the present disclosure, which may be interpreted as a specific condition being satisfied/not being satisfied), a UE may report a measurement result (for example, an L1-RSRP/L1-SINR) to a NW (for example, a base station).

The specific event may be, for example, at least one of an event related to at least one of a serving cell and an additional cell, and an event related to a beam report including at least one of a PCI of the serving cell and a PCI of the additional cell.

### <<Event Related to Case 1>>

An example of an event related to case 1 above will be described. The event may mean, for example, an event related to a serving cell and an additional cell or an event related to a beam report including a PCI of the serving cell and a PCI of the additional cell.

### {Option 0-1}

A beam report (for example, an aperiodic CSI report) may be triggered by reusing one or a plurality of existing events of radio resource management (RRM) (for example, at least one of events A2 to A6 and I1 below). In other words, occurrence of at least one of events A2 to A6 and I1 below (condition of the event being satisfied) may trigger both an RRM report and a CSI report, and the UE may transmit both of the RRM report and the CSI report.

Note that, in the present disclosure, the RRM report may be interpreted as an L3 measurement report, and vice versa.

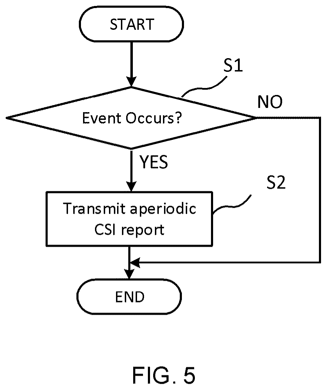

FIG. 5 is a flowchart to show an example of processing of the event-triggered beam reporting. The UE determines whether the event (for example, at least one of events A2 to A6 and I1 below) occurs (S1). In a case of YES in S1, the UE transmits an aperiodic CSI report (and an RRM report) (S2), and in a case of NO in S1, the UE ends the processing related to the zero-th embodiment. The processing of FIG. 5 may be repeated every certain period of time.

In the present disclosure, an aperiodic CSI report being triggered and an aperiodic CSI report being transmitted by the UE may be interchangeably interpreted. A CSI report, an L1 beam report, and a beam report may be interchangeably interpreted.

In events A2 to A6 below, the measurement result may be a measurement result of at least one of an RSRP (L1-RSRP/L3-RSRP), an RSRQ, and an SINR (RS-SINR). In the conditions of events A2 to A6 below, "worse" and "better" may mean "lower" and "higher," respectively. In the conditions of events A2 to A6 below, an SpCell may mean a special cell or at least one of a Primary Cell (PCell) and a Primary Secondary Cell (PSCell). In events A2 to A6 and I1 below, a parameter corresponding to hysteresis may be added to/subtracted from the measurement result. Respective thresholds may be the same or different. A neighbour cell may be a non-serving cell.

Event A2: A measurement result of the serving cell is worse than a threshold.

Event A3: A measurement result of the neighbour cell (value obtained by adding an offset to the measurement result) is better than a measurement result of the SpCell (value obtained by adding an offset to the measurement result).

Event A4: A measurement result of the neighbour cell (value obtained by adding an offset to the measurement result) is better than a threshold.

Event A5: A measurement result of the SpCell is worse than a first threshold, and a measurement result of the neighbour cell (value obtained by adding an offset to the measurement result) is better than a second threshold.

Event A6: A measurement result of the neighbour cell (value obtained by adding an offset to the measurement result) is better than a measurement result of the serving cell (Secondary Cell (Scell)) (value obtained by adding an offset to the measurement result).

Event I1: An interference measurement result is higher than a threshold.

According to option 0-1, triggering of an RRM report can be reused for triggering of a beam report, and thus configuration is facilitated.

### {Option 0-2}

One or a plurality of new events (separate from the events for the RRM report) may be defined to trigger the aperiodic L1 beam report (CSI report). The event(s) is similar to events A2 to A6 and I1 above to be also applied to the triggering of the RRM report, but may be different from any of events A2 to A6 and I1 (the triggering of the RRM report) in at least one of options 0-2-1 to 0-2-4 below.

### {{Option 0-2-1}}

The thresholds may be different. In other words, by using thresholds different from those for the events for the RRM report, events A2 to A6 and I1 may be used for the L1 beam report (CSI report).

### {{Option 0-2-2}}

The event(s) may occur based on a measurement result of a reference signal received power in Layer 1 (L1-RSRP). In other words, a comparison based on an L1-RSRP rather than an L3-RSRP may be performed. Alternatively, a new filtered L1-RSRP with a timescale (periodicity of update/measurement) between that of an L1-RSRP and that of an L3-RSRP (or equal to that of the L1-RSRP or L3-RSRP) may be applied. Alternatively, another metric, such as an L1-SINR and an L3-RSRQ, may be applied. For example, as the new event, event A2' below may be applied:
Event A2': An L1-RSRP measurement result of the serving cell is worse than a threshold.

### {{Option 0-2-3}}

The event(s) may be based on a comparison of a measurement result of one beam level, a plurality of beam levels (independent measurement results of a plurality of beams are combined into one value), or a cell level. For example, event A4' or event A4'' below may be applied:
Event A4': A measurement result of one beam from the neighbour cell is better than a threshold.
Event A4'': A statistic (for example, an average value, a total value, or the like) of measurement results of a plurality of beams (for example, the best X beams) is better than a threshold. X may be fixed or may be configurable via higher layer signaling or the like.

### {{Option 0-2-4}}

The number of beams satisfying the condition (for example, any one of events A2 to A6 and I1) may be considered. For example, the UE may perform the CSI report when X beams satisfy event A4' (when measurement results of X beams from the neighbour cell are better than a threshold).

Note that an example obtained by combining at least two of 0-2-1 to 0-2-4 above may be applied. For example, A4‴ is considered as an event obtained by combining 0-2-2 and 0-2-3. A4ʺʺ is considered as an event obtained by combining 0-2-2, 0-2-3, and 0-2-4:
Event A4‴: An L1-RSRP measurement result of one beam from the neighbour cell is better than a threshold.
Event A4ʺʺ: L1-RSRPs of X respective beams from the neighbour cell are better than a threshold.

According to option 0-2, a CSI report can be performed more quickly than that using an existing event for RRM report using RRC.

### {Option 0-3}

Any combination of two or more of the events of option 0-1 and option 0-2 above may be used to trigger the aperiodic L1 beam report (CSI report).

The existing events for the RRM report and one or more events of option 0-2 may be combined with each other. For example, the CSI report may be triggered when both of event A4 and new event A4‴ occur.

Two or more of the events of option 0-2 may be combined with each other. For example, the CSI report may be triggered when both of event A2' and new event A4‴ are satisfied.

### <<Event Related to Case 2>>

An example of an event related to case 2 above will be described. The event may mean, for example, an event related to only a serving cell or an event related to a beam report including only a PCI of the serving cell.

One or a plurality of new events (separate from the events for the RRM report) may be defined to trigger the aperiodic L1 beam report (CSI report). The event(s) may be at least one of events B2 to B6 and K1 below:
Event B2: A measurement result of a current beam is worse than a threshold.
Event B3: A measurement result of another beam (value obtained by adding an offset to the measurement result) is better than a measurement result of the current beam (value obtained by adding an offset to the measurement result).
Event B4: A measurement result of another beam (value obtained by adding an offset to the measurement result) is better than a threshold.
Event B5: A measurement result of the current beam is worse than a first threshold, and a measurement result of another beam (value obtained by adding an offset to the measurement result) is better than a second threshold.
Event B6: A measurement result of the current beam (value obtained by adding an offset to the measurement result) is worse than a threshold, and a measurement result of another beam (value obtained by adding an offset to the measurement result) is better than a measurement result of the current beam (value obtained by adding an offset to the measurement result).
Event K1: An interference measurement result is higher than a threshold.

Note that the names/reference numerals (for example, A2 to A6, B2 to B6, I1, K1, and the like) related to the events in the present disclosure are merely examples, and are not limited to this example. For example, the names of the events related to case 2 and the names of the corresponding events (with the corresponding numbers) related to case 1 may be the same.

Note that, for at least one of the respective events (events related to case 1/case 2) in the present disclosure, a duration/counter in which (the condition(s) of) the event(s) is satisfied may be defined. The UE/NW may determine that, when at least one of the conditions of the respective events above satisfies a condition related to a specific duration/counter, the condition of each event is satisfied. For example, the UE may determine that the condition of event B3 above is satisfied when a measurement result of such another beam is better than a measurement result of the current beam in a time window of 100 ms. For example, the UE may determine that the condition of event B3 above is satisfied when a measurement result of such another beam is better than a measurement result of the current beam 10 times for a plurality of samples.

In the present disclosure, the "current beam" may mean an SSB/CSI-RS having a QCL relationship with (QCLed with) a PDCCH, for example.

The PDCCH may be, for example, a PDCCH corresponding to a CORESET determined in accordance with a specific rule/higher layer parameter configuration. The CORESET may be, for example, a CORESET with a specific (for example, lowest/highest) CORESET ID.

The CSI-RS may be, for example, a periodic/semi-persistent/aperiodic CSI-RS. The SSB/CSI-RS may be restricted to a periodic CSI-RS/SSB, for example.

In the present disclosure, the "current beam" may be, for example, an indicated TCI state (joint/DL TCI state) in a current unified TCI state. The "current beam" may be, for example, a QCL source RS related to a current indicated TCI state.

In the present disclosure, the "current beam" may be, for example, a beam/resource index (for example, a CRI/SSBRI) reported in a specific (for example, latest) L1-RSRP/L1-SINR.

In the present disclosure, such "another beam" may be, for example, a beam/SSB/CSI-RS/TCI state other than the "current beam."

The UE may be configured with a set of a plurality of beams (candidate beam set). The UE may select/determine such "another beam" from the set.

In the present disclosure, "worse/better" may mean, for example, a lower/higher measurement result (for example, RSRP/SINR/RSRQ).

The threshold above may be predefined by a specification, may be configured/indicated/notified by using higher layer signaling (RRC/MAC CE)/DCI, may be reported by a UE capability, or may be defined by combinations of these. For example, for the threshold, an existing threshold (for example, the threshold used in the RRM/case 1) may be reused.

The offset above related to the threshold may be predefined by a specification, may be configured/indicated/notified by using higher layer signaling (RRC/MAC CE)/DCI, may be reported by a UE capability, or may be defined by combinations of these.

Note that, in the present disclosure, UE-initiated beam reporting, event-triggered beam reporting, beam reporting based on an event, and event-based beam reporting may be interchangeably interpreted.

In the present disclosure, a beam to be reported, a reported beam, and a UE reported beam may be interchangeably interpreted.

### <First Embodiment>

A first embodiment relates to events related to event-triggered beam reporting.

A UE may be configured with operation for a unified TCI state (for example, a joint TCI mode/separate TCI mode).

At least one of the events related to event-triggered beam reporting may be an event(s) based on an MPE-related parameter(s).

For example, "worse/better" in the at least one event may be determined based on an MPE-related parameter (for example, a P-MPR) .

For example, "worse/better" in the at least one event may be determined based on an MPE-related parameter (for example, a P-MPR), independently of a measurement result (for example, an RSRP/SINR/RSRQ).

For example, "worse/better" in the at least one event may be determined based on an MPE-related parameter (for example, a P-MPR), together with a measurement result (for example, an RSRP/SINR/RSRQ).

For example, a beam with a higher P-MPR and a beam with a lower P-MPR may mean "worse" and "better," respectively.

### <<Option 1-1>>

The UE may perform beam reporting related to both a DL beam and a UL beam.

The beam reporting may be referred to as, for example, joint DL/UL beam reporting.

An event for triggering the beam reporting may be common to the DL beam and the UL beam. An event for triggering the beam reporting may not differ for the DL beam and the UL beam.

The beam to be reported may be applied to both DL and UL.

### <<Option 1-2>>

The UE may perform beam reporting related to at least one or any one of a DL beam or a UL beam.

The beam reporting may be referred to as, for example, separate DL/UL beam reporting.

An event for triggering DL beam reporting and an event for triggering UL beam reporting may be separately defined/used.

### {Option 1-2-1}

The beam reporting may be triggered when at least one of the event for triggering DL beam reporting and the event for triggering UL beam reporting occurs.

For example, the beam reporting may be triggered when both of the event for triggering DL beam reporting and the event for triggering UL beam reporting occur.

For example, the beam reporting may be triggered when any one of the event for triggering DL beam reporting or the event for triggering UL beam reporting occurs.

When the beam reporting is triggered, the UE may perform reporting of a DL/UL beam.

For example, when the beam reporting is triggered, the UE may always determine to perform reporting of both a DL beam and a UL beam.

When a DL/UL triggering event occurs, a specific beam may be reported.

The specific beam may be, for example, a new beam for DL/UL satisfying a specific condition in the event.

The specific beam may be, for example, the best beam. The best beam may be at least one of a beam with a higher measurement result (for example, L1-RSRP/L1-SINR/L3-RSRP/L3-RSRQ/another metric (indicator)) and a beam with lower at least one of an MPE-related parameter (for example, a P-MPR) and another metric (indicator).

For example, the specific beam may include a current beam and quality thereof (for example, L1-RSRP/L1-SINR/L3-RSRP/L3-RSRQ/MPE-related parameter (for example, P-MPR)/another metric (indicator)).

When a DL/UL triggering event does not occur, a specific beam may be reported.

The specific beam may be, for example, a DL/UL current beam.

The specific beam may be, for example, the best beam. The best beam may be at least one of a beam with a higher measurement result (for example, L1-RSRP/L1-SINR/L3-RSRP/L3-RSRQ/another metric (indicator)) and a beam with lower at least one of an MPE-related parameter (for example, a P-MPR) and another metric (indicator).

The number of beam reports (for example, the number of beams) for DL/UL may be a predefined value (for example, a fixed value) or may be configured.

For example, X1 beams for DL may be reported, and X2 beams for UL may be reported. For example, these X1 and X2 may be fixed values or may be configured.

For example, these X1 and X2 may be the same value or different values.

For example, at least one of these X1 and X2 may be 1 or 2 or greater.

For example, a total number of beam reports may be defined as X1+X2.

### {Option 1-2-2}

The beam reporting may be triggered when at least one of the event for triggering DL beam reporting and the event for triggering UL beam reporting occurs.

When the beam reporting is triggered, the UE may perform reporting of a DL/UL beam.

For example, when the event for triggering DL beam reporting occurs, and the event for triggering UL beam reporting does not occur, the UE may perform DL beam reporting.

For example, when the event for triggering UL beam reporting occurs, and the event for triggering DL beam reporting does not occur, the UE may perform UL beam reporting.

For example, when the event for triggering DL beam reporting and the event for triggering UL beam reporting occur, the UE may perform DL beam reporting and UL beam reporting.

When a DL/UL triggering event occurs, a specific beam may be reported.

The specific beam may be, for example, a new beam satisfying a specific condition in the event.

The specific beam may be, for example, the best beam. The best beam may be at least one of a beam with a higher measurement result (for example, L1-RSRP/L1-SINR/L3-RSRP/L3-RSRQ/another metric (indicator)) and a beam with lower at least one of an MPE-related parameter (for example, a P-MPR) and another metric (indicator).

For example, the specific beam may include a current beam and quality thereof (for example, L1-RSRP/L1-SINR/L3-RSRP/L3-RSRQ/MPE-related parameter (for example, P-MPR)/another metric (indicator)).

When a DL/UL triggering event does not occur, a specific beam may be reported.

The specific beam may be, for example, a DL/UL current beam.

The specific beam may be, for example, the best beam. The best beam may be at least one of a beam with a higher measurement result (for example, L1-RSRP/L1-SINR/L3-RSRP/L3-RSRQ/another metric (indicator)) and a beam with lower at least one of an MPE-related parameter (for example, a P-MPR) and another metric (indicator).

The number of beam reports (for example, the number of beams) for DL/UL may be a predefined value (for example, a fixed value) or may be configured.

For example, X1 beams for DL may be reported, and X2 beams for UL may be reported. For example, these X1 and X2 may be fixed values or may be configured.

For example, these X1 and X2 may be the same value or different values.

For example, at least one of these X1 and X2 may be 1 or 2 or greater.

For example, the total number of beam reports may be variable. The present option may be applied only when the beam reports are transmitted via a specific signal (for example, a MAC CE).

Application of any one of options 1-2-1 and 1-2-2 above may be reported by the UE, may be configured from a network/base station, or may be defined by a UE capability.

Note that determination of application of any one of options 1-1 and 1-2 above may be predefined by a specification, may be configured by using higher layer signaling, may be based on reported UE capability information, or may be determined by combinations of these.

For example, option 1-1 may be applied when the UE is configured with a mode for a joint TCI state.

For example, option 1-2 may be applied when the UE is configured with a mode for a separate TCI state.

### <<Option 1-3>>

The present option describes a MAC CE for beam reporting. The MAC CE described in the present option can be appropriately applied not only to the first embodiment but also to second to sixth embodiments.

### {Option 1-3-1}

Respective MAC CEs may be defined for options 1-1 and 1-2 above.

The MAC CE for option 1-1 and the MAC CE for option 1-2 may be different. The MAC CE for option 1-1 and the MAC CE for option 1-2 may have different LCIDs.

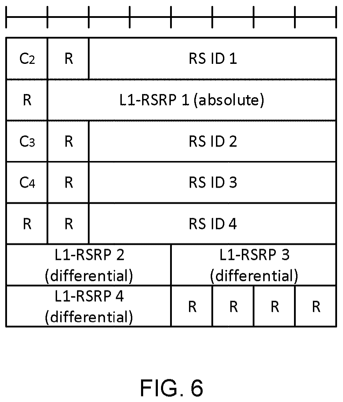

FIG. 6 is a diagram to show an example of the MAC CE for beam reporting for option 1-1.

The MAC CE may include fields indicating the second to fourth measurement results and the presence of RSs ("Cᵢ" field (i = 2, 3, 4)), fields indicating RS IDs corresponding to the top four beams ("RS ID i" field (i = 2, 3, 4)), fields indicating measurement results ("L1-RSRP i" field (i = 2, 3, 4)), and reserved fields ("R" fields).

Note that the diagram to show the example of the MAC CE of the present disclosure shows an example in which measurement results are indicated by L1-RSRPs, but is merely an example, and indicators of the measurement results are not limited to this.

In the MAC CE, a field corresponding to a measurement result of the best (top one) beam may be defined by a first number of bits (for example, 7 bits). In this case, the field may indicate an absolute value of the measurement result.

In the MAC CE, fields corresponding to measurement results of beams other than the best beam (for example, measurement results of the second to fourth beams) may each be defined by a second number of bits (for example, 4 bits). In this case, the fields may each indicate a relative value/differential value to the measurement result of the best beam.

In the MAC CE, fields corresponding to measurement results of beams other than the best beam (for example, measurement results of the second to fourth beams) may each be defined by a first number of bits (for example, 7 bits). In this case, the fields may each indicate an absolute value of each measurement result.

In the MAC CE, the "Cᵢ" field may be represented by 1 bit. The "Cᵢ" field indicating a first value (for example, 0) may indicate that reporting of a corresponding beam is not performed. The "Cᵢ" field indicating a second value (for example, 1) may indicate that reporting of a corresponding beam is performed.

For example, when the "C₂" field, the "C₃" field, and the "C₄" field each indicates 1, reporting of a measurement result and an RS ID of the second beam, a measurement result and an RS ID of the third beam, and a measurement result and an RS ID of the fourth beam may be performed in the MAC CE.

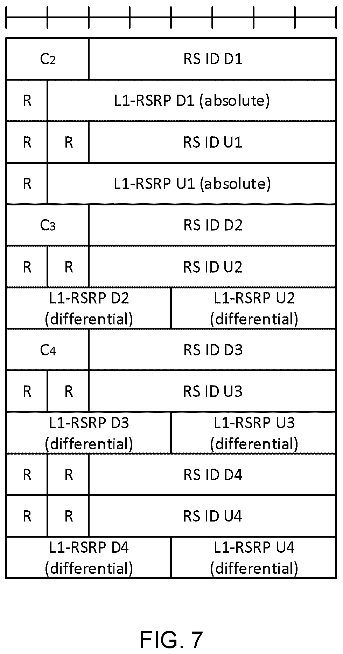

FIG. 7 is a diagram to show an example of the MAC CE for beam reporting for option 1-2. Differences from the MAC CE for option 1-1 above will be described below.

Fields indicating RS IDs corresponding to the top four beams and fields indicating measurement results included in the MAC CE shown in FIG. 7 are broadly classified into respective DL fields ("RS ID Di" field and "L1-RSRP Di" field (i = 2, 3, 4)) and UL fields ("RS ID Ui" field and "L1-RSRP Ui" field (i = 2, 3, 4)).

The "Cᵢ" field included in the MAC CE may be represented by 2 bits.

The "Cᵢ" field indicating a first value (for example, 00) may indicate that reporting of a corresponding beam is not performed.

The "Cᵢ" field indicating a second value (for example, 01) may indicate that only reporting of a corresponding DL beam is performed.

The "Cᵢ" field indicating a third value (for example, 10) may indicate that only reporting of a corresponding UL beam is performed.

The "Cᵢ" field indicating a fourth value (for example, 11) may indicate that both reporting of a corresponding DL beam and reporting of a corresponding UL beam are performed.

Note that the MAC CE for option 1-1/1-2 described above does not include the "Ci" field corresponding to the best beam. In other words, by using the MAC CE, reporting of at least one beam may be performed.

The "Ci" field in the MAC CE for option 1-1/1-2 described above may be a field for indicating that a beam to be reported (for example, a beam with a better measurement result) is absent.

### {Option 1-3-2}

A common MAC CE may be defined for options 1-1 and 1-2 above.

The MAC CE for option 1-1 and the MAC CE for option 1-2 may be the same. The MAC CE for option 1-1 and the MAC CE for option 1-2 may have the same LCID.

For the common MAC CE, the MAC CE for option 1-2 in option 1-3-1 above may be used, for example.

When option 1-1 is applied, and the MAC CE for option 1-2 above is used as a MAC CE for beam reporting, a DL-related field may be used/reported and a UL-related field may not be used/reported, for example.

For example, the number of reported beams in event-based beam reporting may be determined by using higher layer signaling (for example, RRC signaling).

For example, the UE may, when not determining/judging/identifying a beam to report (for example, a better beam), report a specific value (for example, the lowest/highest codepoint of a value of a measurement result (for example, an L1-RSRP)).

For example, the number of reported beams in event-based beam reporting may be the top N beams determined by the UE among beams configured by higher layer signaling (for example, RRC signaling).

For example, when four beams are configured by RRC signaling, and the UE determines/judges two beams to report, the UE may report the two beams in event-based beam reporting.

According to the first embodiment described above, it is possible to appropriately define content of and a method for reporting of DL and UL beams.

### (Second Embodiment)

The present embodiment relates to a method for the beam switching according to the first embodiment.

In the present embodiment, the beam reporting described in option 1-2 (or 1-1) of the first embodiment above may be applied, for example.

A UE may update/change/apply a beam (QCL assumption/TCI state/spatial relation), based on event-triggered beam reporting.

The UE may receive, from a NW (base station), a response (for example, an acknowledgement (ACK) or a negative acknowledgement (NACK)) to the beam reporting. According to this method, a mismatch between recognitions by the UE and the base station can be avoided.

When, after transmitting beam reporting, not receiving an acknowledgement to the beam reporting during a first period or receiving a negative acknowledgement to the beam reporting in the first period, the UE may retransmit the beam reporting after an end of the first period or may transmit new beam reporting different from the transmitted beam reporting. The retransmission of the beam reporting may be performed up to a specific number of times.

The first period and the specific number of times may be predefined by a specification, may be configured/indicated/notified to the UE by using higher layer signaling (RRC/MAC CE)/DCI, or may be reported by UE capability information.

The response to the beam reporting may be transmitted by using DCI, for example.

For example, when beam reporting is performed by using a MAC CE, a response to the beam reporting may be transmitted by using a DCI format having the same HARQ process number as that of the first PUSCH (for transmitting the MAC CE) and having a value of a toggled new data indicator (NDI) field.

When the UE performs beam reporting for a plurality of beams/RSs, a response to the beam reporting may indicate any one of the plurality of beams/RSs. This configuration enables more flexible beam update to be performed.

For example, when the UE reports measurement results for N beams/RSs, a response to the beam reporting may include N-bit information indicating any one of the plurality of beams/RSs.

For example, when the UE reports measurement results for N beams/RSs, the UE may receive 1-bit information as information indicating a response to the beam reporting. In this case, the UE may determine update/change to the best beam among the N beams/RSs.

After a lapse of a specific period of time since reception of a response to the beam reporting (or since transmission of the beam reporting), the UE may update/change/apply a beam (QCL assumption/TCI state/spatial relation).

The specific period of time may be predefined by a specification, may be configured/indicated/notified to the UE by using higher layer signaling (RRC/MAC CE)/DCI, or may be reported by UE capability information.

The specific period of time may be indicated in a specific time unit (for example, X ms/symbols/slots/subslots), for example.

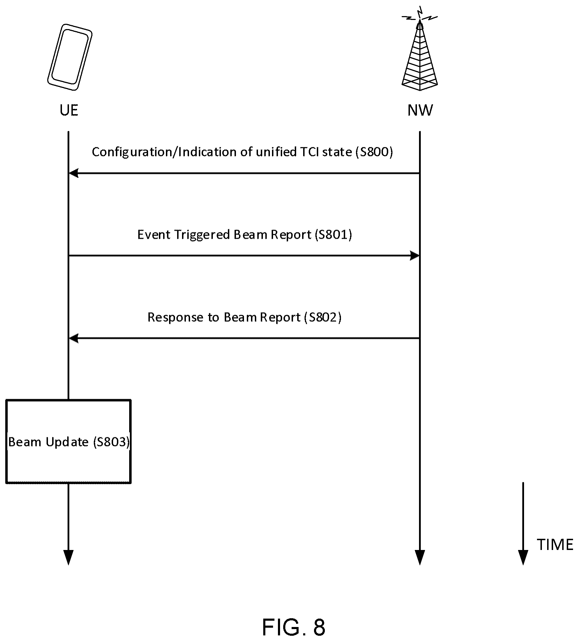

FIG. 8 is a diagram to show an example of the beam update according to the second embodiment. In the example shown in FIG. 8, the UE receives a configuration/indication of a unified TCI state (step S800). Next, the UE performs event-triggered beam reporting to the NW (base station) (step S801). Furthermore, the UE receives, from the NW, a response to the beam reporting (step S802). After a lapse of a specific period of time since the beam reporting (or the reception of the response), beam update based on the beam reporting is performed (step S803).

The UE may, when receiving a response (for example, an ACK) to the event-triggered beam reporting from the network/base station, further receive an additional indication from the network/base station.

The additional indication may be transmitted by using DCI, for example.

The DCI may be, for example, DCI for scheduling a UL/DL channel (for example, a PUSCH/PDSCH), or dedicated DCI for indication related to event-triggered beam reporting (for example, (a specific value of a specific field of) an existing DCI format or a new DCI format (DCI format 0_x/1_x/2_x/3_x (where x is any integer))).

The indication may indicate the presence or absence of application/update of a DL/UL beam.

For example, the indication may indicate a response to and application to/update of a DL beam reported from the UE and may not indicate a response to and application to/update of a UL beam reported (or not reported) from the UE.

For example, the indication may indicate a response to and application to/update of a UL beam reported from the UE and may not indicate a response to and application to/update of a DL beam reported (or not reported) from the UE.

For example, the indication may indicate a response to and application to/update of a DL beam and a UL beam reported from the UE.

According to the second embodiment described above, it is possible to appropriately perform beam switching/update by using beam reporting.

### (Third Embodiment)

A third embodiment relates to an event related to event-triggered beam reporting in a case where multi-TRP are used (multi-TRP framework).

A UE may be configured/indicated with use of N TRPs (where N is an integer of 2 or greater).

An event related to event-triggered beam reporting may be determined for each TRP.

An event related to event-triggered beam reporting for a certain TRP in the case where the multi-TRP are used may be, for example, at least one of events below:
Event 3A2: A measurement result of a current beam for the TRP is worse than a threshold.
Event 3A3: A measurement result of a new beam for the TRP (value obtained by adding an offset to the measurement result) is better than a measurement result of the current beam for the TRP (value obtained by adding an offset to the measurement result).
Event 3A4: A measurement result of the new beam for the TRP (value obtained by adding an offset to the measurement result) is better than a threshold.
Event 3A5: A measurement result of the current beam for the TRP is worse than a first threshold, and a measurement result of the new beam for the TRP (value obtained by adding an offset to the measurement result) is better than a second threshold.
Event 3A6: A measurement result of the current beam for the TRP is worse than a first threshold, and a measurement result of the new beam for the TRP (value obtained by adding an offset to the measurement result) is better than a measurement result of the current beam for the TRP (value obtained by adding an offset to the measurement result).
Event 3I1: An interference measurement result for the current beam for the TRP is higher than a threshold.

The names/numbers of the events above are merely examples, and are not limited to these examples.

In events 3A2 to 3A6 above, the measurement result may be a measurement result of at least one of an RSRP (L1-RSRP/L3-RSRP), an RSRQ, and an SINR (RS-SINR).

In the conditions of events 3A2 to 3A6 above, "worse" and "better" may mean "lower" and "higher," respectively.

In events 3A2 to 3A6 and 3I1 above, a parameter corresponding to hysteresis may be added to/subtracted from the measurement result. The respective thresholds may be the same or different.

The "current beam for a first TRP" and the "current beam for a second TRP" may mean a first indicated (joint/separate (DL/UL)) TCI state and a second indicated (joint/separate (DL/UL)) TCI state, respectively.

The "current beam for the first TRP" and the "current beam for the second TRP" may mean an indicated (joint/separate (DL/UL)) TCI state corresponding to a CORESET pool index of a first value (for example, 0) and an indicated (joint/separate (DL/UL)) TCI state corresponding to a CORESET pool index of a second value (for example, 1), respectively.

The "current beam for the first TRP" and the "current beam for the second TRP" may mean a beam reported for the first TRP in the latest beam reporting and a beam reported for the second TRP in the latest beam reporting, respectively.

When a default beam is defined/configured, the "current beam for the first TRP" may mean a first default joint/DL/UL beam or a default joint/DL/UL beam for the first TRP. When a default beam is defined/configured, the "current beam for the second TRP" may mean a second default joint/DL/UL beam or a default joint/DL/UL beam for the second TRP.

The UE may be configured with a set of candidate beams. The configuration may be performed by using higher layer signaling (RRC/MAC CE), for example.

The UE may select/determine a new beam among the configured set of candidate beams. The UE may follow at least one of options 3-1 and 3-2 below.

### <<Option 3-1>>

One common candidate beam set may be configured for the plurality of (N) TRPs.

The UE may independently select respective new beams for different TRPs and may report the new beams. For example, the UE may select respective different new beams for different TRPs and may report the new beams.

A current beam for one TRP may not be reported as a new beam for another TRP.

A current beam for one TRP may be reported as a new beam for another TRP.

### <<Option 3-2>>

Respective candidate beam sets may be independently configured for the plurality of (N) TRPs.

For example, one candidate beam set may be configured for one TRP. When using the N TRPs, the UE may be configured with N candidate beam sets.

A new beam for each TRP may be selected from a candidate beam set corresponding to each TRP.

For example, "worse" in the event above may mean, for example, at least one of a lower measurement result (for example, RSRP/SINR/RSRQ/another metric) and a higher MPE-related parameter (for example, P-MPR)/another metric.

For example, "better" in the event above may mean, for example, at least one of a higher measurement result (for example, RSRP/SINR/RSRQ/another metric) and a lower MPE-related parameter (for example, P-MPR)/another metric.

For example, the threshold/offset in the event above may be predefined by a specification, may be configured by using higher layer signaling, may be reported by a UE capability, or may be determined by combinations of these.

For example, the threshold/offset may be defined/configured/reported/determined dedicatedly for the event-triggered beam reporting in the multi-TRP framework.

For example, for the threshold/offset, an existing threshold/offset (for example, a threshold/offset used for RRM) may be reused.

According to the third embodiment described above, it is possible to appropriately define an event related to event-triggered beam reporting in a case where multi-TRP are used.

### (Fourth Embodiment)

A fourth embodiment relates to content of event-triggered beam reporting in a case where multi-TRP are used.

When at least one of the events described in the third embodiment above occurs in at least one TRP, beam reporting may be triggered.

### <<Option 4-1>>

When the beam reporting is triggered, a UE may report a beam for a plurality of (N) TRPs.

A specific beam may be reported for a TRP in which a condition of the event is satisfied.

The specific beam may be, for example, a new beam satisfying a specific condition in the event.

The specific beam may be, for example, the best beam. The best beam may be at least one of a beam with a higher measurement result (for example, L1-RSRP/L1-SINR/L3-RSRP/L3-RSRQ/another metric (indicator)) and a beam with lower at least one of an MPE-related parameter (for example, a P-MPR) and another metric (indicator).

For example, the specific beam may include a current beam and quality thereof (for example, L1-RSRP/L1-SINR/L3-RSRP/L3-RSRQ/MPE-related parameter (for example, P-MPR)/another metric (indicator)).

A specific beam may be reported for a TRP in which a condition of the event is not satisfied.

The specific beam may be, for example, a current beam.

The specific beam may be, for example, the best beam. The best beam may be at least one of a beam with a higher measurement result (for example, L1-RSRP/L1-SINR/L3-RSRP/L3-RSRQ/another metric (indicator)) and a beam with lower at least one of an MPE-related parameter (for example, a P-MPR) and another metric (indicator).

The number of beam reports (for example, the number of beams) for each TRP may be a predefined value (for example, a fixed value) or may be configured.

For example, X beams may be reported for one TRP. For example, this X may be a fixed value or may be configured.

For example, this X may be 1 or 2 or greater.

For example, a total number of beam reports may be defined/configured as X×N (where N is the number of TRPs).

### <<Option 4-2>>

When the beam reporting is triggered, the UE may report a beam for a TRP in which the event occurs.

For example, when a triggering event occurs in a first TRP, and no triggering event occurs in a second TRP, the UE may perform beam reporting for the first TRP.

For example, when a triggering event occurs in the second TRP, and no triggering event occurs in the first TRP, the UE may perform beam reporting for the second TRP.

For example, when triggering events occurs in the first TRP and the second TRP, the UE may perform beam reporting for the first TRP and beam reporting for the second TRP.

A specific beam may be reported for a TRP in which a condition of the event is satisfied.

The specific beam may be, for example, a new beam satisfying a specific condition in the event.

The specific beam may be, for example, the best beam. The best beam may be at least one of a beam with a higher measurement result (for example, L1-RSRP/L1-SINR/L3-RSRP/L3-RSRQ/another metric (indicator)) and a beam with lower at least one of an MPE-related parameter (for example, a P-MPR) and another metric (indicator).

For example, the specific beam may include a current beam and quality thereof (for example, L1-RSRP/L1-SINR/L3-RSRP/L3-RSRQ/MPE-related parameter (for example, P-MPR)/another metric (indicator)).

A specific beam may be reported for a TRP in which a condition of the event is not satisfied.

The specific beam may be, for example, a current beam.

The specific beam may be, for example, the best beam. The best beam may be at least one of a beam with a higher measurement result (for example, L1-RSRP/L1-SINR/L3-RSRP/L3-RSRQ/another metric (indicator)) and a beam with lower at least one of an MPE-related parameter (for example, a P-MPR) and another metric (indicator).

The number of beam reports (for example, the number of beams) for each TRP may be a predefined value (for example, a fixed value) or may be configured.

For example, X beams may be reported for one TRP. For example, this X may be a fixed value or may be configured.

For example, this X may be 1 or 2 or greater.

For example, a total number of beam reports may be defined/configured as X×M (where M is the number of TRPs in which a triggering event occurs).

The total number of reported beams in the present option may be variable. The present option may be applied only when the beam reports are transmitted via a specific signal (for example, a MAC CE).

Application of any one of options 4-1 and 4-2 above may be reported by the UE, may be configured from a network/base station, or may be defined by a UE capability.

Note that determination of application of any one of options 4-1 and 4-2 above may be predefined by a specification, may be configured by using higher layer signaling, may be based on reported UE capability information, or may be determined by combinations of these.

According to the fourth embodiment described above, it is possible to appropriately determine content of event-triggered beam reporting in a case where multi-TRP are used.

### (Fifth Embodiment)

A fifth embodiment relates to a method for beam switching in event-triggered beam reporting in a case where multi-TRP are used.

A UE may update/change/apply a beam (QCL assumption/TCI state/spatial relation), based on event-triggered beam reporting.

The UE may receive, from a NW (base station), a response (for example, an acknowledgement (ACK) or a negative acknowledgement (NACK)) to the beam reporting. According to this method, a mismatch between recognitions by the UE and the base station can be avoided.

When, after transmitting beam reporting, not receiving an acknowledgement to the beam reporting during a first period or receiving a negative acknowledgement to the beam reporting in the first period, the UE may retransmit the beam reporting after an end of the first period or may transmit new beam reporting different from the transmitted beam reporting. The retransmission of the beam reporting may be performed up to a specific number of times.

The first period and the specific number of times may be predefined by a specification, may be configured/indicated/notified to the UE by using higher layer signaling (RRC/MAC CE)/DCI, or may be reported by UE capability information.

The response to the beam reporting may be transmitted by using DCI, for example.

For example, when beam reporting is performed by using a MAC CE, a response to the beam reporting may be transmitted by using a DCI format having the same HARQ process number as that of the first PUSCH (for transmitting the MAC CE) and having a value of a toggled new data indicator (NDI) field.

When the UE performs beam reporting for a plurality of beams/RSs, a response to the beam reporting may indicate any one of the plurality of beams/RSs. This configuration enables more flexible beam update to be performed.

For example, when the UE reports measurement results for N beams/RSs, a response to the beam reporting may include N-bit information indicating any one of the plurality of beams/RSs.

For example, when the UE reports measurement results for N beams/RSs, the UE may receive 1-bit information as information indicating a response to the beam reporting. In this case, the UE may determine update/change to the best beam among the N beams/RSs.

After a lapse of a specific period of time since reception of a response to the beam reporting (or since transmission of the beam reporting), the UE may update/change/apply a beam (QCL assumption/TCI state/spatial relation).

The specific period of time may be predefined by a specification, may be configured/indicated/notified to the UE by using higher layer signaling (RRC/MAC CE)/DCI, or may be reported by UE capability information.

The specific period of time may be indicated in a specific time unit (for example, X ms/symbols/slots/subslots), for example.

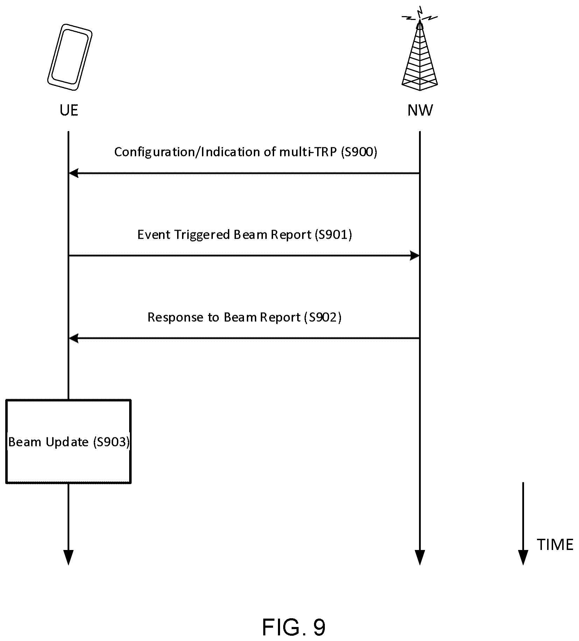

FIG. 9 is a diagram to show an example of the beam update according to the fifth embodiment. In the example shown in FIG. 9, the UE receives a configuration/indication of multi-TRP (step S900). Next, the UE performs event-triggered beam reporting to the NW (base station) (step S901). Furthermore, the UE receives, from the NW, a response to the beam reporting (step S902). After a lapse of a specific period of time since the beam reporting (or the reception of the response), beam update based on the beam reporting is performed (step S903).

The UE may, when receiving a response (for example, an ACK) to the event-triggered beam reporting from the network/base station, further receive an additional indication from the network/base station.

Which of a first reported beam (for example, a reported beam for a first TRP), a second reported beam (for example, a reported beam for a second TRP), or both of the first and second reported beams is to be applied to a DL/UL channel/signal (for example, a PDSCH/PUSCH/PDCCH/PUCCH/SRS/CSI-RS) may be predefined or may be notified from the network/base station.

The notification may be configured/indicated to the UE by using higher layer signaling (RRC/MAC CE)/DCI, for example.

Definition/configuration/indication of which of the first reported beam, the second reported beam, or both of the first and second reported beams is to be applied to the DL/UL channel/signal may be performed for each channel/CORESET/CORESET group/resource/resource set/resource group.

Note that a first indicated (joint/DL/UL) TCI state, an indicated (joint/DL/UL) TCI state dedicated to a CORESET pool index of a first value (for example, 0), a first beam to be reported, and a beam reported for a first TRP may be interchangeably interpreted.

A second indicated (joint/DL/UL) TCI state, an indicated (joint/DL/UL) TCI state dedicated to a CORESET pool index of a second value (for example, 1), a second beam to be reported, and a beam reported for a second TRP may be interchangeably interpreted.

The UE may, when receiving a response (for example, an ACK) to the event-triggered beam reporting from the network/base station, further receive an additional indication from the network/base station.

The additional indication may be transmitted by using DCI, for example.

The DCI may be, for example, DCI for scheduling a UL/DL channel (for example, a PUSCH/PDSCH), or dedicated DCI for indication related to event-triggered beam reporting (for example, (a specific value of a specific field of) an existing DCI format or a new DCI format (DCI format 0_x/1_x/2_x/3_x (where x is any integer))).

The indication may indicate the presence or absence of application to/update of a beam corresponding to one or more TRPs. The UE may determine, based on the indication, a beam to be used for multi-TRP operation and any one of multi-TRP operation or single-TRP operation.

For example, when the indication indicates a response to and application to/update of a first reported beam (reported beam for a first TRP), and does not indicate a response to and application to/update of a second reported beam (reported beam for a second TRP), the UE may perform multi-TRP operation by using a new beam for the first TRP and a current beam for the second TRP.

For example, when the indication indicates a response to and application to/update of the second reported beam (reported beam for the second TRP), and does not indicate a response to and application to/update of the first reported beam (reported beam for the first TRP), the UE may perform multi-TRP operation by using a new beam for the second TRP and a current beam for the first TRP.

For example, when the indication indicates a response to and application to/update of the first reported beam (reported beam for the first TRP), and indicates a response to and application to/update of the second reported beam (reported beam for the second TRP), the UE may perform multi-TRP operation by using a new beam for the first TRP and a new beam for the second TRP.

For example, when the indication indicates a response to and application to/update of the first reported beam (reported beam for the first TRP), and does not indicate a response to and application to/update of the second reported beam (reported beam for the second TRP), the UE may perform single-TRP operation by using a new beam for the first TRP.

For example, when the indication indicates a response to and application to/update of the second reported beam (reported beam for the second TRP), and does not indicate a response to and application to/update of the first reported beam (reported beam for the first TRP), the UE may perform single-TRP operation by using a new beam for the second TRP.

According to the fifth embodiment described above, even when performing multi-TRP operation, it is possible to appropriately perform beam switching/update by using beam reporting.

### <Variations>

The first/second embodiment above may be applied in combination with the third/fourth/fifth embodiment above.

For example, for each TRP, triggering and reporting of the beam reporting may be performed in common for DL and UL or may be performed separately for DL and UL.

For example, when the MAC CE described in the third embodiment is used in multi-TRP, a field indicating an ID related to a TRP corresponding to the MAC CE may be defined. This case enables beam reporting to be performed for a TRP other than a TRP requiring beam reporting. The field may be defined at a position of a reserved field.

For example, when the MAC CE described in the third embodiment is used in multi-TRP, a field indicating an ID related to a TRP corresponding to the MAC CE may not be included. In this case, beam reporting may be performed only for a TRP requiring beam reporting.

The first/third/fourth embodiment above may be applied in a specific case.

The specific case may be, for example, a case where UE-initiated beam reporting (event-triggered beam reporting) is supported and UE-initiated beam switching is supported.

The specific case may be a case where only UE-initiated beam reporting (event-triggered beam reporting) is supported and UE-initiated beam switching is not supported.

The second/fifth embodiment above may be applied in a specific case.

The specific case may be, for example, a case where UE-initiated beam reporting (event-triggered beam reporting) is supported and UE-initiated beam switching is supported.

### <Sixth Embodiment>

A sixth embodiment relates to variations of the third/fourth embodiments for group-based beam reporting.

The third/fourth embodiments above may also be appropriately applied in a case where group-based beam reporting is performed.

The event-triggered beam reporting may include beam reporting for a pair of beams.

The "current beam for a first TRP" in the third embodiment may mean a "first beam among a pair of beams to be reported in the latest group-based beam reporting."

The "current beam for a second TRP" in the third embodiment may mean a "second beam among a pair of beams to be reported in the latest group-based beam reporting."

The "new beam for a first TRP" in the third embodiment may mean a "first beam among a pair of beams to be reported in new group-based beam reporting."

The "new beam for a second TRP" in the third embodiment may mean a "second beam among a pair of beams to be reported in new group-based beam reporting."

For an event related to the group-based beam reporting, the event described in the third embodiment above may be reused or a new event may be defined.

The current beams for the first and second TRPs may be incapable of being simultaneously received (at least in the same time domain).

The current beams for the first and second TRPs may be incapable of being simultaneously transmitted (at least in the same time domain).

For an event related to the group-based beam reporting, the event described in the third embodiment above may be reused.

The event related to the group-based beam reporting may be an event for each beam pair. The event may be, for example, at least one of events below:
Event 6A2: A measurement result of the current beam pair is worse than a threshold.
Event 6A3: A measurement result of a new beam pair (value obtained by adding an offset to the measurement result) is better than a measurement result of the current beam pair (value obtained by adding an offset to the measurement result).
Event 6A4: A measurement result of the new beam pair (value obtained by adding an offset to the measurement result) is better than a threshold.
Event 6A5: A measurement result of the current beam pair is worse than a first threshold, and a measurement result of the new beam pair (value obtained by adding an offset to the measurement result) is better than a second threshold.
Event 6A6: A measurement result of the current beam pair is worse than a first threshold, and a measurement result of the new beam pair (value obtained by adding an offset to the measurement result) is better than a measurement result of the current beam pair (value obtained by adding an offset to the measurement result).
Event 6I1: An interference measurement result for the current beam pair is higher than a threshold.

The names/numbers of the events above are merely examples, and are not limited to these examples.

In events 6A2 to 6A6 above, the measurement result may be a measurement result of at least one of an RSRP (L1-RSRP/L3-RSRP), an RSRQ, an SINR (RS-SINR), and another metric.

In the conditions of events 6A2 to 6A6 above, "worse" and "better" may mean "lower" and "higher," respectively.

For example, "the measurement result of the beam pair is worse" may mean that one beam of the beam pair has at least one of an RSRP/RSRQ/SINR/another metric of a lower value and an MPE-related parameter (for example, a P-MPR)/another metric of a higher value.

For example, "the measurement result of the beam pair is better" may mean that one beam of the beam pair has at least one of an RSRP/RSRQ/SINR/another metric of a higher value and an MPE-related parameter (for example, a P-MPR)/another metric of a lower value.

For example, "the measurement result of the beam pair is worse" may mean that the beam pair has at least one of an RSRP/RSRQ/SINR/another metric of a lower average value and an MPE-related parameter (for example, a P-MPR)/another metric of a higher average value.

For example, "the measurement result of the beam pair is better" may mean that the beam pair has at least one of an RSRP/RSRQ/SINR/another metric of a higher average value and an MPE-related parameter (for example, a P-MPR)/another metric of a lower average value.

In events 6A2 to 6A6 and 6I1 above, a parameter corresponding to hysteresis may be added to/subtracted from the measurement result. The respective thresholds may be the same or different.

Beams of the pair of beams to be reported may be capable of being simultaneously received (option 6-1).

For the pair of beams to be reported, UL transmission spatial filters determined based on the reported pair may be simultaneously applied (option 6-2).

For the pair of beams to be reported, UL transmission spatial filters determined based on the reported pair may be simultaneously applied, and beams of the pair of beams to be reported may be capable of being simultaneously received (option 6-3).

Option 6-1/6-2/6-3 above may be reported by the UE, may be configured from a network, or may be defined as UE capability information.

According to the sixth embodiment described above, even when performing group-based beam reporting, it is possible to appropriately perform event-triggered beam reporting.

### <Supplements>

### {Notification of Information to UE}

Any notification of information (from a network (NW) (for example, a base station (BS))) to a UE (in other words, any reception, in a UE, of information from a BS) in the above-described embodiments may be performed by using physical layer signaling (for example, DCI), higher layer signaling (for example, RRC signaling, a MAC CE), a specific signal/channel (for example, a PDCCH, a PDSCH, a reference signal), or combinations of these.

In a case where the notification described above is performed by the MAC CE, the MAC CE may be identified by a new logical channel ID (LCID) being included in a MAC sub-header, the new logical channel ID being not defined in an existing specification.

In a case where the notification described above is performed by the DCI, the notification described above may be performed by using a specific field of the DCI, a radio network temporary identifier (RNTI) used to scramble a cyclic redundancy check (CRC) bit attached to the DCI, a format of the DCI, and the like.

Any notification of information to a UE in the above-described embodiments may be performed periodically, semi-persistently, or aperiodically.

### {Notification of Information from UE}

Any notification of information from a UE (to a NW) (in other words, any transmission/reporting, in a UE, of information to a BS) in the above-described embodiments may be performed by using physical layer signaling (for example, UCI), higher layer signaling (for example, RRC signaling, a MAC CE), a specific signal/channel (for example, a PUCCH, a PUSCH, a PRACH, a reference signal), or combinations of these.

In a case where the notification described above is performed by the MAC CE, the MAC CE may be identified by a new LCID being included in a MAC sub-header, the new LCID being not defined in an existing specification.

In a case where the notification described above is performed by the UCI, the notification described above may be transmitted by using a PUCCH or a PUSCH.

Any notification of information from a UE in the above-described embodiments may be performed periodically, semi-persistently, or aperiodically.

### {Application of Respective Embodiments}

At least one of the above-described embodiments may be applied to a case where a specific condition is satisfied. The specific condition may be defined in a specification, or may be notified to the UE/BS by using higher layer signaling/physical layer signaling.

At least one of the above-described embodiments may be applied only to a UE that has reported a specific UE capability or that supports the specific UE capability.

The specific UE capability may indicate supporting of specific processing/operation/control/information (for example, at least one of event-triggered beam reporting and event-triggered beam switching) for at least one of the embodiments above.

The specific UE capability may be capability applied over all the frequencies (commonly irrespective of frequency), capability per frequency (for example, one or a combination of cell, band, band combination, BWP, component carrier, and the like), capability per frequency range (for example, Frequency Range 1 (FR1), FR2, FR3, FR4, FR5, FR2-1, FR2-2), capability per subcarrier spacing (SCS), or capability per Feature Set (FS) or Feature Set Per Component-carrier (FSPC).

The specific UE capability may be capability applied over all the duplex schemes (commonly irrespective of duplex scheme) or capability per duplex scheme (for example, time division duplex (TDD) or frequency division duplex (FDD)).

At least one of the above-described embodiments may be applied when the UE is configured/activated/triggered with specific information related to the above-described embodiment (or performance of the operation of the above-described embodiment) by higher layer signaling/physical layer signaling. For example, the specific information may be information indicating enabling of event-triggered beam reporting/switching, any RRC parameter for a specific release (for example, Rel. 18/19), or the like.

When not supporting at least one of the specific UE capabilities or not configured with the specific information, the UE may apply operation of Rel. 15/16/17, for example.

The respective embodiments of the present disclosure may be applied to any one of only L1-RSRP reporting, only L1-SINR reporting, or both L1-RSRP reporting and L1-SINR reporting.

The respective embodiments of the present disclosure may be applied to any one of only a TCI state/spatial relation defined in Rel. 15, only a unified TCI state defined in Rel. 17, or both a TCI state/spatial relation defined in Rel. 15 and a unified TCI state defined in Rel. 17.

The respective embodiments of the present disclosure may be applied to any one of only group-based beam reporting, only non-group-based beam reporting, or both group-based beam reporting and non-group-based beam reporting.

The respective embodiments of the present disclosure may be applied to any one of only L1 beam reporting for a serving cell, only L1 beam reporting for an additional cell, or both L1 beam reporting for a serving cell and L1 beam reporting for an additional cell.

### (Supplementary Notes A)

Regarding one embodiment of the present disclosure, the following supplementary notes of the invention will be given.

### {Supplementary Note A-1}

A terminal including: a receiving section that receives a configuration related to a unified Transmission Configuration Indication (TCI) state; and a control section that determines to perform at least one of reporting of a downlink beam and reporting of an uplink beam, based on the configuration and an event.

### {Supplementary Note A-2}

The terminal according to supplementary note A-1, wherein the control section performs both of the reporting of the downlink beam and the reporting of the uplink beam irrespective of whether the event is an event related to the downlink beam or an event related to the uplink beam.

### {Supplementary Note A-3}

The terminal according to supplementary note A-1 or A-2, wherein the control section performs the reporting of the downlink beam when the event is an event related to the downlink beam, and the control section performs the reporting of the uplink beam when the event is an event related to the uplink beam.

### {Supplementary Note A-4}

The terminal according to any one of supplementary notes A-1 to A-3, wherein the control section performs both of the reporting of the downlink beam and the reporting of the uplink beam when the configuration is a configuration related to a joint TCI state, and the control section performs at least one of the reporting of the downlink beam and the reporting of the uplink beam when the configuration is a configuration related to a separate TCI state.

### (Supplementary Notes B)

Regarding one embodiment of the present disclosure, the following supplementary notes of the invention will be given.

### {Supplementary Note B-1}

A terminal including: a receiving section that receives a configuration or an indication related to multi-transmission/reception point (TRP); and a control section that determines to perform at least one of first beam reporting for a first TRP and second beam reporting for a second TRP, based on the configuration or the indication and an event.

### {Supplementary Note B-2}

The terminal according to supplementary note B-1, wherein the control section performs both of the first beam reporting and the second beam reporting irrespective of whether the event is an event related to the first TRP or an event related to the second TRP the event.

### {Supplementary Note B-3}

The terminal according to supplementary note B-1 or B-2, wherein the control section performs the first beam reporting when the event is an event related to the first TRP, and the control section performs the second beam reporting when the event is an event related to the second TRP.

### {Supplementary Note B-4}

The terminal according to any one of supplementary notes B-1 to B-3, wherein the receiving section receives a response to at least one of the first beam reporting and the second beam reporting, and receives indication information transmitted in addition to the response, and the control section determines, based on the indication information, any one of single-TRP operation and multi-TRP operation.

### (Supplementary Notes C)

Regarding one embodiment of the present disclosure, the following supplementary notes of the invention will be given.

### {Supplementary Note C-1}

A terminal including: a transmitting section that transmits a Medium Access Control (MAC) control element for beam reporting including at least a reference signal indicator (ID) field indicating at least one of a downlink beam and an uplink beam and a field indicating measurement results of the downlink beam and the uplink beam; and a control section that determines beam update, based on a response transmitted for the MAC control element.

### {Supplementary Note C-2}

The terminal according to supplementary note C-1, wherein the reference signal ID field and the field indicating the measurement results are common fields for the downlink beam and the uplink beam.

### {Supplementary Note C-3}

The terminal according to supplementary note C-1 or C-2, wherein the reference signal ID field and the field indicating the measurement results include separate fields for the downlink beam and the uplink beam.

### {Supplementary Note C-4}

The terminal according to any one of supplementary notes C-1 to C-3, wherein the downlink beam and the uplink beam are at least one beam of a pair of beams.

### (Radio Communication System)

Hereinafter, a structure of a radio communication system according to one embodiment of the present disclosure will be described. In this radio communication system, the radio communication method according to each embodiment of the present disclosure described above may be used alone or may be used in combination for communication.

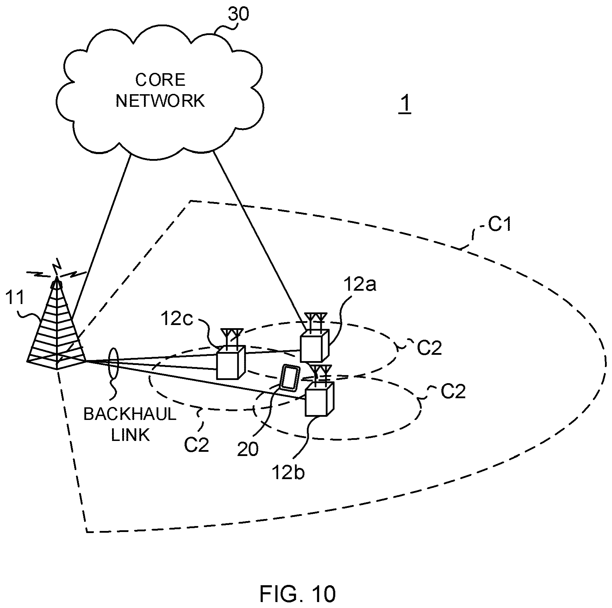

FIG. 10 is a diagram to show an example of a schematic structure of the radio communication system according to one embodiment. The radio communication system 1 (which may be simply referred to as a system 1) may be a system implementing communication using Long Term Evolution (LTE), 5th generation mobile communication system New Radio (5G NR) and so on the specifications of which have been drafted by Third Generation Partnership Project (3GPP).

The radio communication system 1 may support dual connectivity (multi-RAT dual connectivity (MR-DC)) between a plurality of Radio Access Technologies (RATs). The MR-DC may include dual connectivity (E-UTRA-NR Dual Connectivity (EN-DC)) between LTE (Evolved Universal Terrestrial Radio Access (E-UTRA)) and NR, dual connectivity (NR-E-UTRA Dual Connectivity (NE-DC)) between NR and LTE, and so on.

In EN-DC, a base station (eNB) of LTE (E-UTRA) is a master node (MN), and a base station (gNB) of NR is a secondary node (SN). In NE-DC, a base station (gNB) of NR is an MN, and a base station (eNB) of LTE (E-UTRA) is an SN.

The radio communication system 1 may support dual connectivity between a plurality of base stations in the same RAT (for example, dual connectivity (NR-NR Dual Connectivity (NN-DC)) where both of an MN and an SN are base stations (gNB) of NR).

The radio communication system 1 may include a base station 11 that forms a macro cell C1 of a relatively wide coverage, and base stations 12 (12a to 12c) that form small cells C2, which are placed within the macro cell C1 and which are narrower than the macro cell C1. The user terminal 20 may be located in at least one cell. The arrangement, the number, and the like of each cell and user terminal 20 are by no means limited to the aspect shown in the diagram. Hereinafter, the base stations 11 and 12 will be collectively referred to as "base stations 10," unless specified otherwise.

The user terminal 20 may be connected to at least one of the plurality of base stations 10. The user terminal 20 may use at least one of carrier aggregation (CA) and dual connectivity (DC) using a plurality of component carriers (CCs).

Each CC may be included in at least one of a first frequency band (Frequency Range 1 (FR1)) and a second frequency band (Frequency Range 2 (FR2)). The macro cell C1 may be included in FR1, and the small cells C2 may be included in FR2. For example, FR1 may be a frequency band of 6 GHz or less (sub-6 GHz), and FR2 may be a frequency band which is higher than 24 GHz (above-24 GHz). Note that frequency bands, definitions and so on of FR1 and FR2 are by no means limited to these, and for example, FR1 may correspond to a frequency band which is higher than FR2.

The user terminal 20 may communicate using at least one of time division duplex (TDD) and frequency division duplex (FDD) in each CC.

The plurality of base stations 10 may be connected by a wired connection (for example, optical fiber in compliance with the Common Public Radio Interface (CPRI), the X2 interface and so on) or a wireless connection (for example, an NR communication). For example, if an NR communication is used as a backhaul between the base stations 11 and 12, the base station 11 corresponding to a higher station may be referred to as an "Integrated Access Backhaul (IAB) donor," and the base station 12 corresponding to a relay station (relay) may be referred to as an "IAB node."

The base station 10 may be connected to a core network 30 through another base station 10 or directly. For example, the core network 30 may include at least one of Evolved Packet Core (EPC), 5G Core Network (5GCN), Next Generation Core (NGC), and so on.

The core network 30 may include network functions (NF), such as a User Plane Function (UPF), an Access and Mobility management Function (AMF), a Session Management Function (SMF), Unified Data Management (UDM), an Application Function (AF), a Data Network (DN), a Location Management Function (LMF), and operation, administration, and maintenance (Management) (OAM). Note that a plurality of functions may be provided by one network node. Communication with an external network (for example, the Internet) may be performed via the DN.

The user terminal 20 may be a terminal supporting at least one of communication schemes such as LTE, LTE-A, 5G, and so on.

In the radio communication system 1, an orthogonal frequency division multiplexing (OFDM)-based wireless access scheme may be used. For example, in at least one of the downlink (DL) and the uplink (UL), Cyclic Prefix OFDM (CP-OFDM), Discrete Fourier Transform Spread OFDM (DFT-s-OFDM), Orthogonal Frequency Division Multiple Access (OFDMA), Single Carrier Frequency Division Multiple Access (SC-FDMA), and so on may be used.

The wireless access scheme may be referred to as a "waveform." Note that, in the radio communication system 1, another wireless access scheme (for example, another single carrier transmission scheme, another multi-carrier transmission scheme) may be used for a wireless access scheme in the UL and the DL.

In the radio communication system 1, a downlink shared channel (Physical Downlink Shared Channel (PDSCH)), which is used by each user terminal 20 on a shared basis, a broadcast channel (Physical Broadcast Channel (PBCH)), a downlink control channel (Physical Downlink Control Channel (PDCCH)) and so on, may be used as downlink channels.

In the radio communication system 1, an uplink shared channel (Physical Uplink Shared Channel (PUSCH)), which is used by each user terminal 20 on a shared basis, an uplink control channel (Physical Uplink Control Channel (PUCCH)), a random access channel (Physical Random Access Channel (PRACH)) and so on may be used as uplink channels.

User data, higher layer control information, System Information Blocks (SIBs) and so on are communicated on the PDSCH. User data, higher layer control information and so on may be communicated on the PUSCH. The Master Information Blocks (MIBs) may be communicated on the PBCH.

Lower layer control information may be communicated on the PDCCH. For example, the lower layer control information may include downlink control information (DCI) including scheduling information of at least one of the PDSCH and the PUSCH.

Note that DCI for scheduling the PDSCH may be referred to as "DL assignment," "DL DCI," and so on, and DCI for scheduling the PUSCH may be referred to as "UL grant," "UL DCI," and so on. Note that the PDSCH may be interpreted as "DL data," and the PUSCH may be interpreted as "UL data."

For detection of the PDCCH, a control resource set (CORESET) and a search space may be used. The CORESET corresponds to a resource to search DCI. The search space corresponds to a search area and a search method of PDCCH candidates. One CORESET may be associated with one or more search spaces. The UE may monitor a CORESET associated with a certain search space, based on search space configuration.

One search space may correspond to a PDCCH candidate corresponding to one or more aggregation levels. One or more search spaces may be referred to as a "search space set." Note that a "search space," a "search space set," a "search space configuration," a "search space set configuration," a "CORESET," a "CORESET configuration" and so on of the present disclosure may be interchangeably interpreted.

Uplink control information (UCI) including at least one of channel state information (CSI), transmission confirmation information (for example, which may be referred to as Hybrid Automatic Repeat reQuest ACKnowledgement (HARQ-ACK), ACK/NACK, and so on), and scheduling request (SR) may be communicated by means of the PUCCH. By means of the PRACH, random access preambles for establishing connections with cells may be communicated.

Note that the downlink, the uplink, and so on in the present disclosure may be expressed without a term of "link." In addition, various channels may be expressed without adding "Physical" to the head.

In the radio communication system 1, a synchronization signal (SS), a downlink reference signal (DL-RS), and so on may be communicated. In the radio communication system 1, a cell-specific reference signal (CRS), a channel state information-reference signal (CSI-RS), a demodulation reference signal (DMRS), a positioning reference signal (PRS), a phase tracking reference signal (PTRS), and so on may be communicated as the DL-RS.

For example, the synchronization signal may be at least one of a primary synchronization signal (PSS) and a secondary synchronization signal (SSS). A signal block including an SS (PSS, SSS) and a PBCH (and a DMRS for a PBCH) may be referred to as an "SS/PBCH block," an "SS Block (SSB)," and so on. Note that an SS, an SSB, and so on may be also referred to as a "reference signal."

In the radio communication system 1, a sounding reference signal (SRS), a demodulation reference signal (DMRS), and so on may be communicated as an uplink reference signal (UL-RS). Note that DMRS may be referred to as a "user terminal specific reference signal (UE-specific Reference Signal)."

### (Base Station)

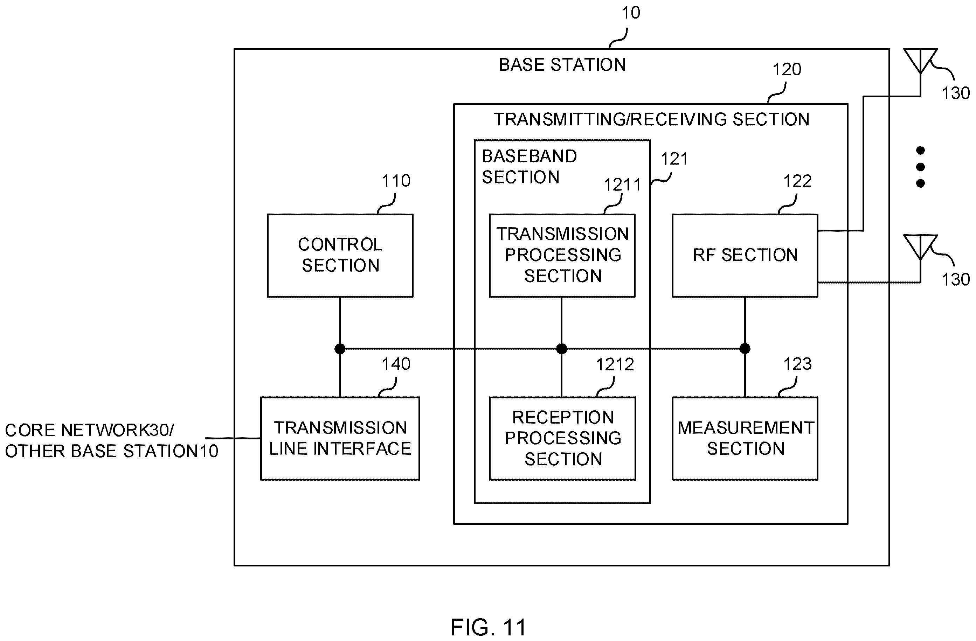

FIG. 11 is a diagram to show an example of a structure of the base station according to one embodiment. The base station 10 includes a control section 110, a transmitting/receiving section 120, transmitting/receiving antennas 130 and a communication path interface (transmission line interface) 140. Note that the base station 10 may include one or more control sections 110, one or more transmitting/receiving sections 120, one or more transmitting/receiving antennas 130, and one or more communication path interfaces 140.

Note that, the present example primarily shows functional blocks that pertain to characteristic parts of the present embodiment, and it is assumed that the base station 10 may include other functional blocks that are necessary for radio communication as well. Part of the processes of each section described below may be omitted.

The control section 110 controls the whole of the base station 10. The control section 110 can be constituted with a controller, a control circuit, or the like described based on general understanding of the technical field to which the present disclosure pertains.

The control section 110 may control generation of signals, scheduling (for example, resource allocation, mapping), and so on. The control section 110 may control transmission and reception, measurement and so on using the transmitting/receiving section 120, the transmitting/receiving antennas 130, and the communication path interface 140. The control section 110 may generate data, control information, a sequence and so on to transmit as a signal, and forward the generated items to the transmitting/receiving section 120. The control section 110 may perform call processing (setting up, releasing) for communication channels, manage the state of the base station 10, and manage the radio resources.

The transmitting/receiving section 120 may include a baseband section 121, a Radio Frequency (RF) section 122, and a measurement section 123. The baseband section 121 may include a transmission processing section 1211 and a reception processing section 1212. The transmitting/receiving section 120 can be constituted with a transmitter/receiver, an RF circuit, a baseband circuit, a filter, a phase shifter, a measurement circuit, a transmitting/receiving circuit, or the like described based on general understanding of the technical field to which the present disclosure pertains.

The transmitting/receiving section 120 may be structured as a transmitting/receiving section in one entity, or may be constituted with a transmitting section and a receiving section. The transmitting section may be constituted with the transmission processing section 1211, and the RF section 122. The receiving section may be constituted with the reception processing section 1212, the RF section 122, and the measurement section 123.

The transmitting/receiving antennas 130 can be constituted with antennas, for example, an array antenna, or the like described based on general understanding of the technical field to which the present disclosure pertains.

The transmitting/receiving section 120 may transmit the above-described downlink channel, synchronization signal, downlink reference signal, and so on. The transmitting/receiving section 120 may receive the above-described uplink channel, uplink reference signal, and so on.

The transmitting/receiving section 120 may form at least one of a transmit beam and a receive beam by using digital beam forming (for example, precoding), analog beam forming (for example, phase rotation), and so on.

The transmitting/receiving section 120 (transmission processing section 1211) may perform the processing of the Packet Data Convergence Protocol (PDCP) layer, the processing of the Radio Link Control (RLC) layer (for example, RLC retransmission control), the processing of the Medium Access Control (MAC) layer (for example, HARQ retransmission control), and so on, for example, on data and control information and so on acquired from the control section 110, and may generate bit string to transmit.

The transmitting/receiving section 120 (transmission processing section 1211) may perform transmission processing such as channel coding (which may include error correction coding), modulation, mapping, filtering, discrete Fourier transform (DFT) processing (as necessary), inverse fast Fourier transform (IFFT) processing, precoding, digital-to-analog conversion, and so on, on the bit string to transmit, and output a baseband signal.

The transmitting/receiving section 120 (RF section 122) may perform modulation to a radio frequency band, filtering, amplification, and so on, on the baseband signal, and transmit the signal of the radio frequency band through the transmitting/receiving antennas 130.

On the other hand, the transmitting/receiving section 120 (RF section 122) may perform amplification, filtering, demodulation to a baseband signal, and so on, on the signal of the radio frequency band received by the transmitting/receiving antennas 130.

The transmitting/receiving section 120 (reception processing section 1212) may apply reception processing such as analog-digital conversion, fast Fourier transform (FFT) processing, inverse discrete Fourier transform (IDFT) processing (as necessary), filtering, de-mapping, demodulation, decoding (which may include error correction decoding), MAC layer processing, the processing of the RLC layer and the processing of the PDCP layer, and so on, on the acquired baseband signal, and acquire user data, and so on.

The transmitting/receiving section 120 (measurement section 123) may perform the measurement related to the received signal. For example, the measurement section 123 may perform Radio Resource Management (RRM) measurement, Channel State Information (CSI) measurement, and so on, based on the received signal. The measurement section 123 may measure a received power (for example, Reference Signal Received Power (RSRP)), a received quality (for example, Reference Signal Received Quality (RSRQ), a Signal to Interference plus Noise Ratio (SINR), a Signal to Noise Ratio (SNR)), a signal strength (for example, Received Signal Strength Indicator (RSSI)), channel information (for example, CSI), and so on. The measurement results may be output to the control section 110.

The communication path interface 140 may perform transmission/reception (backhaul signaling) of a signal with an apparatus included in the core network 30 (for example, a network node providing NF) or other base stations 10, and so on, and acquire or transmit user data (user plane data), control plane data, and so on for the user terminal 20.

Note that the transmitting section and the receiving section of the base station 10 in the present disclosure may be constituted with at least one of the transmitting/receiving section 120, the transmitting/receiving antennas 130, and the communication path interface 140.

The transmitting/receiving section 120 may transmit a configuration related to a unified Transmission Configuration Indication (TCI) state. The control section 110 may control reception of at least one of reporting of a downlink beam and reporting of an uplink beam performed based on the configuration and an event (first and second embodiments).

The transmitting/receiving section 120 may transmit a configuration or an indication related to multi-transmission/reception point (TRP). The control section 110 may control reception of at least one of first beam reporting for a first TRP and second beam reporting for a second TRP performed based on the configuration or the indication and an event (third to fifth embodiments).

The transmitting/receiving section 120 may receive a Medium Access Control (MAC) control element for beam reporting including at least a reference signal indicator (ID) field indicating at least one of a downlink beam and an uplink beam and a field indicating measurement results of the downlink beam and the uplink beam. The control section 110 may indicate beam update by using a response to the MAC control element (first to sixth embodiments).

### (User Terminal)

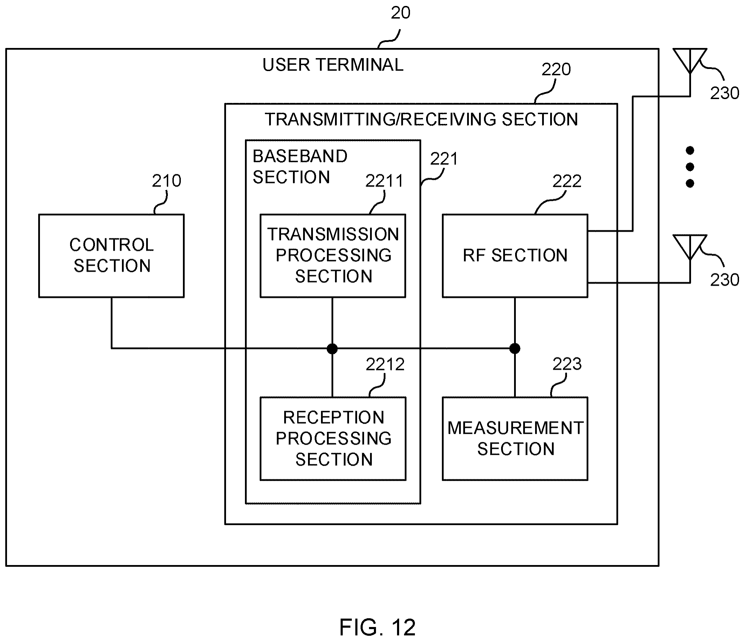

FIG. 12 is a diagram to show an example of a structure of the user terminal according to one embodiment. The user terminal 20 includes a control section 210, a transmitting/receiving section 220, and transmitting/receiving antennas 230. Note that the user terminal 20 may include one or more control sections 210, one or more transmitting/receiving sections 220, and one or more transmitting/receiving antennas 230.

Note that, the present example primarily shows functional blocks that pertain to characteristic parts of the present embodiment, and it is assumed that the user terminal 20 may include other functional blocks that are necessary for radio communication as well. Part of the processes of each section described below may be omitted.

The control section 210 controls the whole of the user terminal 20. The control section 210 can be constituted with a controller, a control circuit, or the like described based on general understanding of the technical field to which the present disclosure pertains.

The control section 210 may control generation of signals, mapping, and so on. The control section 210 may control transmission/reception, measurement and so on using the transmitting/receiving section 220, and the transmitting/receiving antennas 230. The control section 210 generates data, control information, a sequence and so on to transmit as a signal, and may forward the generated items to the transmitting/receiving section 220.

The transmitting/receiving section 220 may include a baseband section 221, an RF section 222, and a measurement section 223. The baseband section 221 may include a transmission processing section 2211 and a reception processing section 2212. The transmitting/receiving section 220 can be constituted with a transmitter/receiver, an RF circuit, a baseband circuit, a filter, a phase shifter, a measurement circuit, a transmitting/receiving circuit, or the like described based on general understanding of the technical field to which the present disclosure pertains.

The transmitting/receiving section 220 may be structured as a transmitting/receiving section in one entity, or may be constituted with a transmitting section and a receiving section. The transmitting section may be constituted with the transmission processing section 2211, and the RF section 222. The receiving section may be constituted with the reception processing section 2212, the RF section 222, and the measurement section 223.

The transmitting/receiving antennas 230 can be constituted with antennas, for example, an array antenna, or the like described based on general understanding of the technical field to which the present disclosure pertains.

The transmitting/receiving section 220 may receive the above-described downlink channel, synchronization signal, downlink reference signal, and so on. The transmitting/receiving section 220 may transmit the above-described uplink channel, uplink reference signal, and so on.

The transmitting/receiving section 220 may form at least one of a transmit beam and a receive beam by using digital beam forming (for example, precoding), analog beam forming (for example, phase rotation), and so on.

The transmitting/receiving section 220 (transmission processing section 2211) may perform the processing of the PDCP layer, the processing of the RLC layer (for example, RLC retransmission control), the processing of the MAC layer (for example, HARQ retransmission control), and so on, for example, on data and control information and so on acquired from the control section 210, and may generate bit string to transmit.

The transmitting/receiving section 220 (transmission processing section 2211) may perform transmission processing such as channel coding (which may include error correction coding), modulation, mapping, filtering, DFT processing (as necessary), IFFT processing, precoding, digital-to-analog conversion, and so on, on the bit string to transmit, and output a baseband signal.

Note that, whether to apply DFT processing or not may be based on the configuration of the transform precoding. The transmitting/receiving section 220 (transmission processing section 2211) may perform, for a certain channel (for example, PUSCH), the DFT processing as the above-described transmission processing to transmit the channel by using a DFT-s-OFDM waveform if transform precoding is enabled, and otherwise, does not need to perform the DFT processing as the above-described transmission processing.

The transmitting/receiving section 220 (RF section 222) may perform modulation to a radio frequency band, filtering, amplification, and so on, on the baseband signal, and transmit the signal of the radio frequency band through the transmitting/receiving antennas 230.

On the other hand, the transmitting/receiving section 220 (RF section 222) may perform amplification, filtering, demodulation to a baseband signal, and so on, on the signal of the radio frequency band received by the transmitting/receiving antennas 230.

The transmitting/receiving section 220 (reception processing section 2212) may apply reception processing such as analog-digital conversion, FFT processing, IDFT processing (as necessary), filtering, de-mapping, demodulation, decoding (which may include error correction decoding), MAC layer processing, the processing of the RLC layer and the processing of the PDCP layer, and so on, on the acquired baseband signal, and acquire user data, and so on.

The transmitting/receiving section 220 (measurement section 223) may perform the measurement related to the received signal. For example, the measurement section 223 may perform RRM measurement, CSI measurement, and so on, based on the received signal. The measurement section 223 may measure a received power (for example, RSRP), a received quality (for example, RSRQ, SINR, SNR), a signal strength (for example, RSSI), channel information (for example, CSI), and so on. The measurement results may be output to the control section 210.

Note that the measurement section 223 may derive channel measurement for CSI calculation, based on a resource for channel measurement. The resource for channel measurement may be, for example, a non zero power (NZP) CSI-RS resource. The measurement section 223 may derive interference measurement for CSI calculation, based on a resource for interference measurement. The resource for interference measurement may be at least one of an NZP CSI-RS resource for interference measurement, a CSI-interference measurement (IM) resource, and the like. Note that CSI-IM may be referred to as CSI-interference management (IM), and may be interchangeably interpreted as zero power (ZP) CSI-RS. Note that, in the present disclosure, the CSI-RS, the NZP CSI-RS, the ZP CSI-RS, the CSI-IM, a CSI-SSB, and the like may be interchangeably interpreted.

Note that the transmitting section and the receiving section of the user terminal 20 in the present disclosure may be constituted with at least one of the transmitting/receiving section 220 and the transmitting/receiving antennas 230.

The transmitting/receiving section 220 may receive a configuration related to a unified Transmission Configuration Indication (TCI) state. The control section 210 may determine to perform at least one of reporting of a downlink beam and reporting of an uplink beam, based on the configuration and an event (first and second embodiments).

The control section 210 may perform both of the reporting of the downlink beam and the reporting of the uplink beam irrespective of whether the event is an event related to the downlink beam or an event related to the uplink beam (first embodiment).

The control section 210 may perform the reporting of the downlink beam when the event is an event related to the downlink beam. The control section 210 may perform the reporting of the uplink beam when the event is an event related to the uplink beam (first embodiment).

The control section 210 may perform both of the reporting of the downlink beam and the reporting of the uplink beam when the configuration is a configuration related to a joint TCI state. The control section 210 may perform at least one of the reporting of the downlink beam and the reporting of the uplink beam when the configuration is a configuration related to a separate TCI state (first embodiment).

The transmitting/receiving section 220 may receive a configuration or an indication related to multi-transmission/reception point (TRP). The control section 210 may determine to perform at least one of first beam reporting for a first TRP and second beam reporting for a second TRP, based on the configuration or the indication and an event (third to fifth embodiments).

The control section 210 may perform both of the first beam reporting and the second beam reporting irrespective of whether the event is an event related to the first TRP or an event related to the second TRP the event (third embodiment).

The control section 210 may perform the first beam reporting when the event is an event related to the first TRP. The control section 210 may perform the second beam reporting when the event is an event related to the second TRP (third embodiment).

The transmitting/receiving section 220 may receive a response to at least one of the first beam reporting and the second beam reporting. The transmitting/receiving section 220 may receive indication information transmitted in addition to the response. The control section 210 may determine, based on the indication information, any one of single-TRP operation and multi-TRP operation (fifth embodiment).

The transmitting/receiving section 220 may transmit a Medium Access Control (MAC) control element for beam reporting including at least a reference signal indicator (ID) field indicating at least one of a downlink beam and an uplink beam and a field indicating measurement results of the downlink beam and the uplink beam. The control section 210 may determine beam update, based on a response transmitted for the MAC control element (first to sixth embodiments).

The reference signal ID field and the field indicating the measurement results may be common fields for the downlink beam and the uplink beam (first embodiment).

The reference signal ID field and the field indicating the measurement results may include separate fields for the downlink beam and the uplink beam (first embodiment).

The downlink beam and the uplink beam may be at least one beam of a pair of beams (sixth embodiment).

### (Hardware Structure)

Note that the block diagrams that have been used to describe the above embodiments show blocks in functional units. These functional blocks (components) may be implemented in arbitrary combinations of at least one of hardware and software. Also, the method for implementing each functional block is not particularly limited. That is, each functional block may be realized by one piece of apparatus that is physically or logically coupled, or may be realized by directly or indirectly connecting two or more physically or logically separate apparatuses (for example, via wire, wireless, or the like) and using these apparatuses. The functional blocks may be implemented by combining software into the apparatus described above or the plurality of apparatuses described above.

Here, functions include judgment, determination, decision, calculation, computation, processing, derivation, investigation, search, confirmation, reception, transmission, output, access, resolution, selection, designation, establishment, comparison, assumption, expectation, considering, broadcasting, notifying, communicating, forwarding, configuring, reconfiguring, allocating (mapping), assigning, and the like, but functions are by no means limited to these. For example, a functional block (component) to implement a function of transmission may be referred to as a "transmitting section (transmitting unit)", a "transmitter", or the like. The method for implementing each component is not particularly limited as described above.

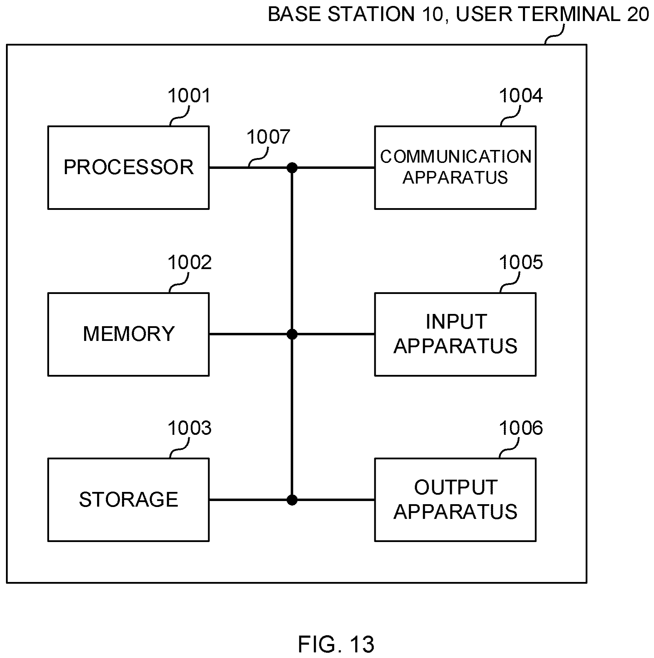

For example, a base station, a user terminal, and so on according to one embodiment of the present disclosure may function as a computer that executes the processes of the radio communication method of the present disclosure. FIG. 13 is a diagram to show an example of a hardware structure of the base station and the user terminal according to one embodiment. Physically, the above-described base station 10 and user terminal 20 may each be formed as a computer apparatus that includes a processor 1001, a memory 1002, a storage 1003, a communication apparatus 1004, an input apparatus 1005, an output apparatus 1006, a bus 1007, and so on.

Note that in the present disclosure, the words such as an apparatus, a circuit, a device, a section, a unit, and so on can be interchangeably used. The hardware structure of the base station 10 and the user terminal 20 may be configured to include one or more of apparatuses shown in the drawings, or may be configured not to include part of apparatuses.

For example, although one processor 1001 is shown in the drawings, a plurality of processors may be provided. Furthermore, processes may be implemented with one processor or may be implemented at the same time, in sequence, or in different manners with two or more processors. Note that the processor 1001 may be implemented with one or more chips.

Each function of the base station 10 and the user terminal 20 is implemented, for example, by allowing certain software (programs) to be read on hardware such as the processor 1001 and the memory 1002, and by allowing the processor 1001 to perform calculations to control communication via the communication apparatus 1004 and control at least one of reading and writing of data in the memory 1002 and the storage 1003.

The processor 1001 controls the whole computer by, for example, running an operating system. The processor 1001 may be configured with a central processing unit (CPU), which includes interfaces with peripheral apparatus, control apparatus, computing apparatus, a register, and so on. For example, at least a part of the control section 110 (210), the transmitting/receiving section 120 (220), and so on may be implemented by the processor 1001.

Furthermore, the processor 1001 reads programs (program codes), software modules, data, and so on from at least one of the storage 1003 and the communication apparatus 1004, into the memory 1002, and executes various processes according to these. As for the programs, programs to allow computers to execute at least a part of the operations explained in the above-described embodiments are used. For example, the control section 110 (210) may be implemented by control programs that are stored in the memory 1002 and that operate on the processor 1001, and other functional blocks may be implemented likewise.

The memory 1002 is a computer-readable recording medium, and may be constituted with, for example, at least one of a Read Only Memory (ROM), an Erasable Programmable ROM (EPROM), an Electrically EPROM (EEPROM), a Random Access Memory (RAM), and other appropriate storage media. The memory 1002 may be referred to as a "register", a "cache", a "main memory (primary storage apparatus)" and so on. The memory 1002 can store executable programs (program codes), software modules, and the like for implementing the radio communication method according to one embodiment of the present disclosure.

The storage 1003 is a computer-readable recording medium, and may be constituted with, for example, at least one of a flexible disk, a floppy (registered trademark) disk, a magneto-optical disk (for example, a compact disc (Compact Disc ROM (CD-ROM) and so on), a digital versatile disc, a Blu-ray (registered trademark) disk), a removable disk, a hard disk drive, a smart card, a flash memory device (for example, a card, a stick, and a key drive), a magnetic stripe, a database, a server, and other appropriate storage media. The storage 1003 may be referred to as "auxiliary storage apparatus".

The communication apparatus 1004 is hardware (transmitting/receiving device) for allowing inter-computer communication via at least one of wired and wireless networks, and may be referred to as, for example, a "network device", a "network controller", a "network card", a "communication module", and so on. The communication apparatus 1004 may be configured to include a high frequency switch, a duplexer, a filter, a frequency synthesizer, and so on in order to realize, for example, at least one of frequency division duplex (FDD) and time division duplex (TDD). For example, the transmitting/receiving section 120 (220), the transmitting/receiving antenna 130 (230), and so on may be implemented by the communication apparatus 1004. In the transmitting/receiving section 120 (220), the transmitting section 120a (220a) and the receiving section 120b (220b) can be implemented while being separated physically or logically.

The input apparatus 1005 is an input device that receives input from the outside (for example, a keyboard, a mouse, a microphone, a switch, a button, a sensor or the like). The output apparatus 1006 is an output device that allows sending output to the outside (for example, a display, a speaker, a Light Emitting Diode (LED) lamp or the like). Note that the input apparatus 1005 and the output apparatus 1006 may be provided in an integrated structure (for example, a touch panel).

Furthermore, these types of apparatus, including the processor 1001, the memory 1002, and others, are connected by a bus 1007 for communicating information. The bus 1007 may be formed with a single bus, or may be formed with buses that vary between apparatuses.

Also, the base station 10 and the user terminal 20 may be structured to include hardware such as a microprocessor, a Digital Signal Processor (DSP), an Application Specific Integrated Circuit (ASIC), a Programmable Logic Device (PLD), a Field Programmable Gate Array (FPGA), and so on, and a part or all of the functional blocks may be implemented by the hardware. For example, the processor 1001 may be implemented with at least one of these pieces of hardware.

### (Variations)

It should be noted that a term used in the present disclosure and a term required for understanding of the present disclosure may be replaced by a term having the same or similar meaning. For example, a channel, a symbol, and a signal (or signaling) may be interchangeably used. Further, a signal may be a message. A reference signal may be abbreviated as an RS, and may be referred to as a pilot, a pilot signal or the like, depending on which standard applies. Furthermore, a component carrier (CC) may be referred to as a cell, a frequency carrier, a carrier frequency and so on.

A radio frame may be constituted of one or a plurality of periods (frames) in the time domain. Each of one or a plurality of periods (frames) constituting a radio frame may be referred to as a "subframe". Furthermore, a subframe may be constituted of one or a plurality of slots in the time domain. A subframe may be a fixed time length (for example, 1 ms) independent of numerology.

Here, numerology may be a communication parameter applied to at least one of transmission and reception of a certain signal or channel. For example, numerology may indicate at least one of a subcarrier spacing (SCS), a bandwidth, a symbol length, a cyclic prefix length, a transmission time interval (TTI), the number of symbols per TTI, a radio frame structure, a specific filter processing performed by a transceiver in the frequency domain, a specific windowing processing performed by a transceiver in the time domain, and so on.

A slot may be constituted of one or a plurality of symbols in the time domain (Orthogonal Frequency Division Multiplexing (OFDM) symbols, Single Carrier Frequency Division Multiple Access (SC-FDMA) symbols, and so on). Furthermore, a slot may be a time unit based on numerology.

A slot may include a plurality of mini-slots. Each mini-slot may be constituted of one or a plurality of symbols in the time domain. A mini-slot may be referred to as a "sub-slot". A mini-slot may be constituted of symbols in number less than the slot. A PDSCH (or PUSCH) transmitted in a time unit larger than a mini-slot may be referred to as "PDSCH (PUSCH) mapping type A". A PDSCH (or PUSCH) transmitted using a mini-slot may be referred to as "PDSCH (PUSCH) mapping type B".

A radio frame, a subframe, a slot, a mini-slot, and a symbol all express time units in signal communication. A radio frame, a subframe, a slot, a mini-slot, and a symbol may each be called by other applicable terms. Note that time units such as a frame, a subframe, a slot, mini-slot, and a symbol in the present disclosure may be interchangeably used.

For example, one subframe may be referred to as a "TTI", a plurality of consecutive subframes may be referred to as a "TTI", or one slot or one mini-slot may be referred to as a "TTI". In other words, at least one of a subframe and a TTI may be a subframe (1 ms) in existing LTE, may be a period shorter than 1 ms (for example, 1 to 13 symbols), or may be a period longer than 1 ms. Note that a unit expressing TTI may be referred to as a "slot", a "mini-slot", or the like, instead of a "subframe".

Here, a TTI refers to the minimum time unit of scheduling in radio communication, for example. For example, in LTE systems, a base station performs, for user terminals, scheduling of allocating of radio resources (such as a frequency bandwidth and transmit power that are available for each user terminal) in TTI units. Note that the definition of TTIs is not limited to this.

The TTI may be a transmission time unit for channel-encoded data packets (transport blocks), code blocks, codewords, or the like, or may be a unit of processing in scheduling, link adaptation, or the like. Note that, when a TTI is given, a time interval (for example, the number of symbols) to which transport blocks, code blocks, codewords, or the like are actually mapped may be shorter than the TTI.

Note that, in the case where one slot or one mini-slot is referred to as a TTI, one or more TTIs (that is, one or more slots or one or more mini-slots) may be the minimum time unit of scheduling. Furthermore, the number of slots (the number of mini-slots) constituting the minimum time unit of the scheduling may be controlled.

A TTI having a time length of 1 ms may be referred to as a "normal TTI" (TTI in 3GPP Rel. 8 to Rel. 12), a "long TTI", a "normal subframe", a "long subframe", a "slot" and so on. A TTI that is shorter than a normal TTI may be referred to as a "shortened TTI", a "short TTI", a "partial or fractional TTI", a "shortened subframe", a "short subframe", a "mini-slot", a "sub-slot", a "slot" and so on.

Note that a long TTI (for example, a normal TTI, a subframe, and so on) may be interpreted as a TTI having a time length exceeding 1 ms, and a short TTI (for example, a shortened TTI and so on) may be interpreted as a TTI having a TTI length shorter than the TTI length of a long TTI and equal to or longer than 1 ms.

A resource block (RB) is the unit of resource allocation in the time domain and the frequency domain, and may include one or a plurality of consecutive subcarriers in the frequency domain. The number of subcarriers included in an RB may be the same regardless of numerology, and, for example, may be 12. The number of subcarriers included in an RB may be determined based on numerology.

Also, an RB may include one or a plurality of symbols in the time domain, and may be one slot, one mini-slot, one subframe, or one TTI in length. One TTI, one subframe, and so on each may be constituted of one or a plurality of resource blocks.

Note that one or a plurality of RBs may be referred to as a "physical resource block (Physical RB (PRB))", a "sub-carrier group (SCG)", a "resource element group (REG)", a "PRB pair", an "RB pair" and so on.

Furthermore, a resource block may be constituted of one or a plurality of resource elements (REs). For example, one RE may correspond to a radio resource field of one subcarrier and one symbol.

A bandwidth part (BWP) (which may be referred to as a "fractional bandwidth", and so on) may represent a subset of contiguous common resource blocks (common RBs) for certain numerology in a certain carrier. Here, a common RB may be specified by an index of the RB based on the common reference point of the carrier. A PRB may be defined by a certain BWP and may be numbered in the BWP.

The BWP may include a UL BWP (BWP for UL) and a DL BWP (BWP for DL). One or a plurality of BWPs may be configured in one carrier for a UE.

At least one of configured BWPs may be active, and a UE may not need to assume to transmit/receive a certain signal/channel outside the active BWP(s). Note that a "cell", a "carrier", and so on in the present disclosure may be used interchangeably with a "BWP".

Note that the above-described structures of radio frames, subframes, slots, mini-slots, symbols, and so on are merely examples. For example, structures such as the number of subframes included in a radio frame, the number of slots per subframe or radio frame, the number of mini-slots included in a slot, the numbers of symbols and RBs included in a slot or a mini-slot, the number of subcarriers included in an RB, the number of symbols in a TTI, the symbol length, the cyclic prefix (CP) length, and so on can be variously changed.

Further, the information, parameters, and so on described in the present disclosure may be expressed using absolute values or relative values with respect to certain values, or may be expressed using another corresponding information. For example, a radio resource may be specified by a certain index.

The names used for parameters and so on in the present disclosure are in no respect used as limitations. Furthermore, mathematical expressions that use these parameters, and so on may be different from those explicitly disclosed in the present disclosure. Since various channels (PUCCH, PDCCH, and so on) and information elements may be identified by any suitable names, the various names allocated to these various channels and information elements are in no respect used as limitations.

The information, signals, and so on described in the present disclosure may be represented by using any of a variety of different technologies. For example, data, an instruction, a command, information, a signal, a bit, a symbol, a chip, and so on, described throughout the description of the present application, may be represented by a voltage, an electric current, electromagnetic waves, magnetic fields, a magnetic particle, optical fields, a photon, or any combination thereof.

Also, information, signals, and so on can be output at least one of from a higher layer to a lower layer and from a lower layer to a higher layer. Information, signals, and so on may be input and/or output via a plurality of network nodes.

The information, signals, and so on that are input and/or output may be stored in a specific location (for example, a memory) or may be managed by using a management table. The information, signals, and so on to be input and/or output can be overwritten, updated, or added. The information, signals, and so on that has been output may be deleted. The information, signals, and so on that has been input may be transmitted to another apparatus.

Notification of information is by no means limited to the aspects/embodiments described in the present disclosure, and other methods may be used as well. For example, notification of information in the present disclosure may be implemented by using physical layer signaling (for example, downlink control information (DCI), uplink control information (UCI)), higher layer signaling (for example, Radio Resource Control (RRC) signaling, broadcast information (master information block (MIB), system information block (SIB), and so on), Medium Access Control (MAC) signaling and so on), and other signals or combinations of these.

Note that physical layer signaling may be referred to as "Layer 1/Layer 2 (L1/L2) control information (L1/L2 control signals)", "L1 control information (L1 control signal)", and so on. Also, RRC signaling may be referred to as an "RRC message", and can be, for example, an RRC connection setup message, an RRC connection reconfiguration message, and so on. Also, MAC signaling may be notified using, for example, MAC control elements (MAC CEs).

Also, notification of certain information (for example, notification of "X") does not necessarily have to be performed explicitly, and can be performed implicitly (by, for example, not reporting this certain information or reporting another piece of information).

A decision may be realized by a value (0 or 1) represented by one bit, by a boolean value (true or false), or by comparison of numerical values (e.g., comparison with a certain value).

Software, irrespective of whether referred to as "software", "firmware", "middleware", "microcode", or "hardware description language", or called by other terms, should be interpreted broadly to mean instructions, instruction sets, codes, code segments, program codes, programs, subprograms, software modules, applications, software applications, software packages, routines, subroutines, objects, executable files, execution threads, procedures, functions, and the like.

Also, software, instructions, information, and the like may be transmitted and received via a transmission medium. For example, when software is transmitted from a website, a server, or other remote sources by using at least one of wired technologies (coaxial cable, fiber optic cable, twisted-pair cable, digital subscriber line (DSL), and so on) and wireless technologies (infrared radiation, microwaves, and so on), at least one of these wired technologies and wireless technologies is also included in the definition of the transmission medium.

The terms "system" and "network" used in the present disclosure may be used interchangeably. The "network" may mean an apparatus (for example, a base station) included in the network.

In the present disclosure, the terms such as "precoding", a "precoder", a "weight (precoding weight)", "quasi-co-location (QCL)", a "Transmission Configuration Indication state (TCI state)", a "spatial relation", a "spatial domain filter", a "transmit power", "phase rotation", an "antenna port", a "layer", "the number of layers", a "rank", a "resource", a "resource set", a "beam", a "beam width", a "beam angular degree", an "antenna", an "antenna element", a "panel", a "UE panel", a "transmission entity", a "reception entity", and so on may be used interchangeably.

Note that, in the present disclosure, the "antenna port" may be used interchangeably with an "antenna port for an arbitrary signal/channel" (for example, a demodulation reference signal (DMRS) port). In the present disclosure, the "resource" may be used interchangeably with a "resource for an arbitrary signal/channel" (e.g., a reference signal resource, an SRS resource, and the like). The resource may include time/frequency/code/space/power resource. The spatial domain transmission filter may include at least one of a spatial domain transmission filter and a spatial domain reception filter.

The group may include at least one of, for example, a spatial relationship group, a code division multiplexing (CDM) group, a reference signal (RS) group, a control resource set (CORESET) group, a PUCCH group, an antenna port group (for example, a DMRS port group), a layer group, a resource group, a beam group, an antenna group, a panel group, and the like.

In the present disclosure, a "beam", an "SRS resource indicator (SRI)", a "CORESET", a "CORESET pool", a "PDSCH", a "PUSCH", a "codeword (CW)", a "transport block (TB)", an "RS", and the like may be interchangeably used.

In the present disclosure, a "TCI state", a "downlink TCI state (DL TCI state)", an "uplink TCI state (UL TCI state)", a "unified TCI state", a "common TCI state", a "joint TCI state", and the like may be used interchangeably.

In the present disclosure, "QCL", "QCL assumption", "QCL relationship", "QCL type information", "QCL property/properties", "specific QCL type (e.g., type A, type D) property", "specific QCL type (e.g., type A, type D)", and the like may be used interchangeably.

In the present disclosure, an "index", an "identifier (ID)", an "indicator", "indication", a "resource ID", and the like may be used interchangeably. In the present disclosure, a sequence, a list, a set, a group, a cluster, a subset, and the like may be used interchangeably.

A spatial relation information identifier (ID) (TCI state ID) and spatial relation information (TCI state) may be interchangeably used. "Spatial relation information (TCI state)" may be used interchangeably with "a set of spatial relation information (TCI state)", "one or a plurality of spatial relation information", and the like. The TCI state and the TCI may be used interchangeably. The spatial relation information and the spatial relation may be used interchangeably.

In the present disclosure, the terms such as a "base station (BS)", a "radio base station" a "fixed station," a "NodeB", an "eNB (eNodeB)", a "gNB (gNodeB)", an "access point", a "transmission point (TP)", a "reception point (RP)", a "transmission/reception point (TRP)", a "panel", a "cell", a "sector", a "cell group", a "carrier", a "component carrier", and so on can be used interchangeably. The base station may be referred to as the terms such as a "macro cell", a "small cell", a "femto cell", a "pico cell", and so on.

A base station can accommodate one or a plurality of (for example, three) cells. When a base station accommodates a plurality of cells, the entire coverage area of the base station can be partitioned into multiple smaller areas, and each smaller area can provide communication services through base station subsystems (for example, indoor small base stations (Remote Radio Heads (RRHs))). The term "cell" or "sector" refers to part of or the entire coverage area of at least one of a base station and a base station subsystem that provides communication services within this coverage.

In the present disclosure, transmitting information to the terminal by the base station may be interchangeably interpreted as instructing the terminal to perform control/operation based on the information by the base station.

In the present disclosure, the terms "mobile station (MS)", "user terminal", "user equipment (UE)", and "terminal" may be used interchangeably.

A mobile station may be referred to as a "subscriber station", "mobile unit" "subscriber unit", "wireless unit", "remote unit", "mobile device", "wireless device", "wireless communication device", "remote device", "mobile subscriber station", "access terminal", "mobile terminal", "wireless terminal", "remote terminal", "handset", "user agent", "mobile client", "client", or some other appropriate terms in some cases.

At least one of a base station and a mobile station may be referred to as a "transmitting apparatus", a "receiving apparatus", a "radio communication apparatus" or the like. Note that at least one of a base station and a mobile station may be a device mounted on a moving object or a moving object itself, and so on.

The moving object is a movable object with any moving speed, and naturally, it also includes a moving object stopped. Examples of the moving object include a vehicle, a transport vehicle, an automobile, a motorcycle, a bicycle, a connected car, a loading shovel, a bulldozer, a wheel loader, a dump truck, a fork lift, a train, a bus, a trolley, a rickshaw, a ship and other watercraft, an airplane, a rocket, a satellite, a drone, a multicopter, a quadcopter, a balloon, and an object mounted on any of these, but these are not restrictive. The moving object may be a moving object that autonomously travels based on a direction for moving.

The moving object may be a vehicle (for example, a car, an airplane, and the like), may be a moving object which moves unmanned (for example, a drone, an automatic operation car, and the like), or may be a robot (a manned type or unmanned type). Note that at least one of a base station and a mobile station also includes an apparatus which does not necessarily move during communication operation. For example, at least one of a base station and a mobile station may be an Internet of Things (IoT) device such as a sensor.

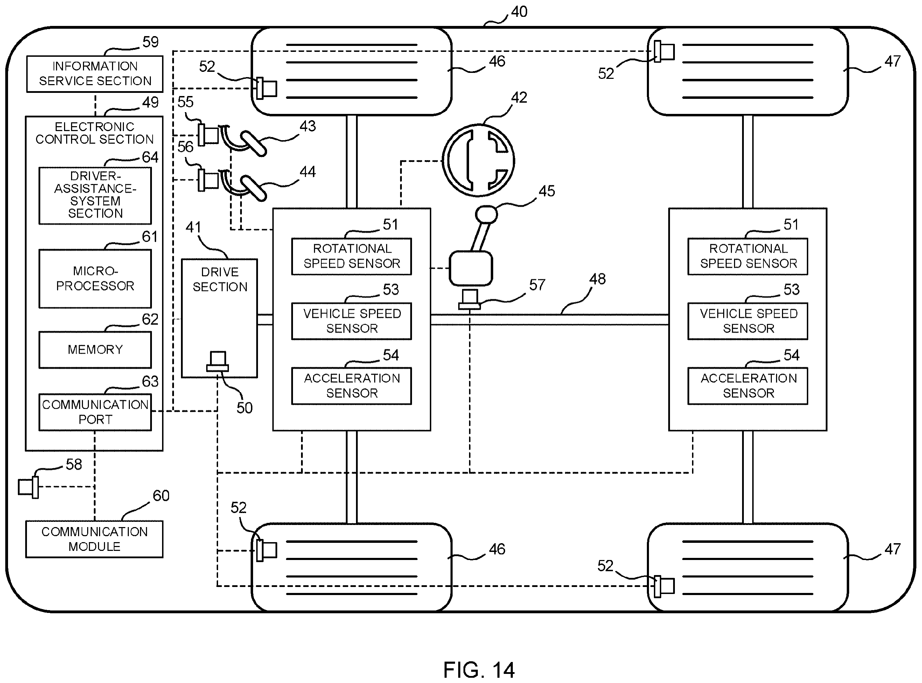

FIG. 14 is a diagram to show an example of a vehicle according to one embodiment. A vehicle 40 includes a driving section 41, a steering section 42, an accelerator pedal 43, a brake pedal 44, a shift lever 45, right and left front wheels 46, right and left rear wheels 47, an axle 48, an electronic control section 49, various sensors (including a current sensor 50, a rotational speed sensor 51, a pneumatic sensor 52, a vehicle speed sensor 53, an acceleration sensor 54, an accelerator pedal sensor 55, a brake pedal sensor 56, a shift lever sensor 57, and an object detection sensor 58), an information service section 59, and a communication module 60.

The driving section 41 includes, for example, at least one of an engine, a motor, and a hybrid of an engine and a motor. The steering section 42 includes at least a steering wheel (also referred to as a handle), and is configured to steer at least one of the front wheels 46 and the rear wheels 47, based on operation of the steering wheel operated by a user.

The electronic control section 49 includes a microprocessor 61, a memory (ROM, RAM) 62, and a communication port (for example, an input/output (IO) port) 63. The electronic control section 49 receives, as input, signals from the various sensors 50 to 58 provided in the vehicle. The electronic control section 49 may be referred to as an Electronic Control Unit (ECU).

Examples of the signals from the various sensors 50 to 58 include a current signal from the current sensor 50 for sensing current of a motor, a rotational speed signal of the front wheels 46/rear wheels 47 acquired by the rotational speed sensor 51, a pneumatic signal of the front wheels 46/rear wheels 47 acquired by the pneumatic sensor 52, a vehicle speed signal acquired by the vehicle speed sensor 53, an acceleration signal acquired by the acceleration sensor 54, a depressing amount signal of the accelerator pedal 43 acquired by the accelerator pedal sensor 55, a depressing amount signal of the brake pedal 44 acquired by the brake pedal sensor 56, an operation signal of the shift lever 45 acquired by the shift lever sensor 57, and a detection signal for detecting an obstruction, a vehicle, a pedestrian, and the like acquired by the object detection sensor 58.

The information service section 59 includes: various devices for providing (outputting) various pieces of information such as driving information, traffic information, and entertainment information, such as a car navigation system, an audio system, a speaker, a display, a television, and a radio; and one or more ECUs that control these devices. The information service section 59 provides various pieces of information/services (for example, multimedia information/multimedia service) to an occupant of the vehicle 40, using information acquired from an external apparatus via the communication module 60 and the like.

The information service section 59 may include an input device (for example, a keyboard, a mouse, a microphone, a switch, a button, a sensor, a touch panel, and the like) for receiving input from the outside, or may include an output device (for example, a display, a speaker, an LED lamp, a touch panel, and the like) for implementing output to the outside.

A driving assistance system section 64 includes: various devices for providing functions for preventing an accident and reducing a driver's driving load, such as a millimeter wave radar, Light Detection and Ranging (LiDAR), a camera, a positioning locator (for example, a Global Navigation Satellite System (GNSS) and the like), map information (for example, a high definition (HD) map, an autonomous vehicle (AV) map, and the like), a gyro system (for example, an inertial measurement apparatus (inertial measurement unit (IMU)), an inertial navigation apparatus (inertial navigation system (INS)), and the like), an artificial intelligence (AI) chip, and an AI processor; and one or more ECUs that control these devices. The driving assistance system section 64 transmits and receives various pieces of information via the communication module 60, and implements a driving assistance function or an autonomous driving function.

The communication module 60 can communicate with the microprocessor 61 and the constituent elements of the vehicle 40 via the communication port 63. For example, the communication module 60 transmits and receives data (information), via the communication port 63, to and from the driving section 41, the steering section 42, the accelerator pedal 43, the brake pedal 44, the shift lever 45, the right and left front wheels 46, the right and left rear wheels 47, the axle 48, the microprocessor 61 and the memory (ROM, RAM) 62 in the electronic control section 49, and the various sensors 50 to 58, which are included in the vehicle 40.

The communication module 60 is a communication device that can be controlled by the microprocessor 61 of the electronic control section 49 and that can perform communication with an external apparatus. For example, the communication module 60 performs transmission and reception of various pieces of information to and from the external apparatus via radio communication. The communication module 60 may be either inside or outside the electronic control section 49. The external apparatus may be, for example, the base station 10, the user terminal 20, or the like described above. The communication module 60 may be, for example, at least one of the base station 10 and the user terminal 20 described above (may function as at least one of the base station 10 and the user terminal 20).

The communication module 60 may transmit at least one of signals input from the various sensors 50 to 58 to the electronic control section 49, information obtained based on the signals, and information based on an input from the outside (a user) obtained via the information service section 59, to the external apparatus via radio communication. The electronic control section 49, the various sensors 50 to 58, the information service section 59, and the like may be referred to as input sections that receive input. For example, the PUSCH transmitted by the communication module 60 may include information based on the input.

The communication module 60 receives various pieces of information (traffic information, signal information, intervehicle distance information, and the like) transmitted from the external apparatus, and displays the received information on the information service section 59 included in the vehicle. The information service section 59 may be referred to as an output section that outputs information (for example, outputs information to devices, such as a display and a speaker, based on the PDSCH received by the communication module 60 (or data/information decoded from the PDSCH)).

The communication module 60 stores the various pieces of information received from the external apparatus in the memory 62 that can be used by the microprocessor 61. Based on the pieces of information stored in the memory 62, the microprocessor 61 may control the driving section 41, the steering section 42, the accelerator pedal 43, the brake pedal 44, the shift lever 45, the right and left front wheels 46, the right and left rear wheels 47, the axle 48, the various sensors 50 to 58, and the like provided in the vehicle 40.

Furthermore, the base station in the present disclosure may be interpreted as a user terminal. For example, each aspect/embodiment of the present disclosure may be applied to the structure that replaces a communication between a base station and a user terminal with a communication between a plurality of user terminals (for example, which may be referred to as "Device-to-Device (D2D)", "Vehicle-to-Everything (V2X)", and the like). In this case, user terminals 20 may have the functions of the base stations 10 described above. The words such as "uplink" and "downlink" may be interpreted as the words corresponding to the terminal-to-terminal communication (for example, "sidelink"). For example, an uplink channel, a downlink channel and so on may be interpreted as a sidelink channel.

Likewise, the user terminal in the present disclosure may be interpreted as a base station. In this case, the base station 10 may have the functions of the user terminal 20 described above.

Operations which have been described in the present disclosure to be performed by a base station may, in some cases, be performed by an upper node of the base station. In a network including one or a plurality of network nodes with base stations, it is clear that various operations that are performed to communicate with terminals can be performed by base stations, one or more network nodes (for example, Mobility Management Entities (MMEs), Serving-Gateways (S-GWs), and so on may be possible, but these are not limiting) other than base stations, or combinations of these.

Each aspect/embodiment described in the present disclosure may be used independently, may be used in combination, or may be switched depending on the mode of implementation. The order of processes, sequences, flowcharts, and so on that have been used to describe the aspects/embodiments in the present disclosure may be re-ordered as long as inconsistencies do not arise. For example, although various methods have been illustrated in the present disclosure with various components of steps in exemplary orders, the specific orders that are illustrated herein are by no means limiting.

The aspects/embodiments illustrated in the present disclosure may be applied to Long Term Evolution (LTE), LTE-Advanced (LTE-A), LTE-Beyond (LTE-B), SUPER 3G, IMT-Advanced, 4th generation mobile communication system (4G), 5th generation mobile communication system (5G), 6th generation mobile communication system (6G), xth generation mobile communication system (xG (where x is, for example, an integer or a decimal)), Future Radio Access (FRA), New-Radio Access Technology (RAT), New Radio (NR), New radio access (NX), Future generation radio access (FX), Global System for Mobile communications (GSM (registered trademark)), CDMA 2000, Ultra Mobile Broadband (UMB), IEEE 802.11 (Wi-Fi (registered trademark)), IEEE 802.16 (WiMAX (registered trademark)), IEEE 802.20, Ultra-WideBand (UWB), Bluetooth (registered trademark), systems that use other adequate radio communication methods and next-generation systems that are enhanced, modified, created, or defined based on these. A plurality of systems may be combined (for example, a combination of LTE or LTE-A and 5G, and the like) for application.

The phrase "based on" (or "on the basis of") as used in the present disclosure does not mean "based only on" (or "only on the basis of"), unless otherwise specified. In other words, the phrase "based on" (or "on the basis of") means both "based only on" and "based at least on" ("only on the basis of" and "at least on the basis of").

Reference to elements with designations such as "first", "second", and so on as used in the present disclosure does not generally limit the quantity or order of these elements. These designations may be used in the present disclosure only for convenience, as a method for distinguishing between two or more elements. Thus, reference to the first and second elements does not imply that only two elements may be employed, or that the first element must precede the second element in some way.

The term "deciding (determining)" as in the present disclosure herein may encompass a wide variety of actions. For example, "deciding (determining)" may be interpreted to mean making "decisions(determinations)" about determining, calculating, computing, processing, deriving, investigating, looking up, search and inquiry (for example, searching a table, a database, or some other data structures), ascertaining, and so on.

Furthermore, "deciding (determining)" may be interpreted to mean making "decisions(determinations)" about receiving (for example, receiving information), transmitting (for example, transmitting information), input, output, accessing (for example, accessing data in a memory), and so on.

In addition, "deciding (determining)" as used herein may be interpreted to mean making "decisions(determinations)" about resolving, selecting, choosing, establishing, comparing, and so on. In other words, "deciding (determining)" may be interpreted to mean making "decisions (determinations)" about some action. In the present disclosure, "decide/deciding (determine/determining)" may be interchangeably interpreted as the above-described actions.

In the present disclosure, "decide/deciding (determine/determining)" may be used interchangeably with "assume/assuming", "expect/expecting", "consider/considering", and the like. Note that, in the present disclosure, "not expect to" may be used interchangeably with "expect not to".

In the present disclosure, "expect" may be used interchangeably with "be expected". For example, "expect(s) ..." ("..." may be expressed using, for example, a that-clause, a toinfinitive, or the like) may be used interchangeably with "be expected ...". "Does not expect ..." may be used interchangeably with "be not expected ...". Furthermore, "an apparatus A is not expected ..." may be used interchangeably with "an apparatus B other than the apparatus A does not expect ... for the apparatus A" (for example, when the apparatus A is a UE, the apparatus B may be a base station).

"The maximum transmit power" described in the present disclosure may mean a maximum value of the transmit power, may mean the nominal maximum transmit power (the nominal UE maximum transmit power), or may mean the rated maximum transmit power (the rated UE maximum transmit power).

The terms "connected", "coupled", or any variation of these terms as used in the present disclosure mean any direct or indirect connections or coupling between two or more elements, and may include the presence of one or more intermediate elements between two elements that are "connected" or "coupled" to each other. The coupling or connection between the elements may be physical, logical, or a combination thereof. For example, "connection" may be interpreted as "access".

In the present disclosure, when two elements are connected, the two elements may be considered "connected" or "coupled" to each other by using one or more electrical wires, cables and printed electrical connections, and, as some non-limiting and noninclusive examples, by using electromagnetic energy having wavelengths in radio frequency regions, microwave regions, (both visible and invisible) optical regions, or the like.

In the present disclosure, the phrase "A and B are different" may mean that "A and B are different from each other". It should be noted that the phrase may mean that "A and B are each different from C". The terms "separate", "coupled", and so on may be interpreted similarly to "different".

In the case where the terms "include", "including", and variations thereof are used in the present disclosure, these terms are intended to be comprehensive, in a manner similar to the term "comprising". Furthermore, the term "or" used in the present disclosure is not intended to be an "exclusive or".

For example, in the present disclosure, where an article such as "a", "an", and "the" is added by translation, the present disclosure may include that a noun after the article is in a plural form.

In the present disclosure, "equal to or less than", "less than", "equal to or more than", "more than", "equal to", and the like may be used interchangeably. In the present disclosure, words such as "good", "bad", "large", "small", "high", "low", "early", "late", "wide", "narrow", and the like may be used interchangeably irrespective of positive degree, comparative degree, and superlative degree. In the present disclosure, expressions obtained by adding "i-th" (i is any integer) to words such as "good", "bad", "large", "small", "high", "low", "early", "late", "wide", "narrow", and the like may be used interchangeably irrespective of positive degree, comparative degree, and superlative degree (for example, "best" may be used interchangeably with "i-th best", and vice versa).

In the present disclosure, "of", "for", "regarding", "related to", "associated with", and the like may be used interchangeably.

In the present disclosure, "when A, B", "if A, (then) B", "B upon A", "B in response to A", "B based on A", "B during/while A", "B before A", "B (at the same time as)/on A", "B after A", "B since A", "B until A", and the like may be used interchangeably. Note that A and B here may be replaced with appropriate expressions such as nouns, dynamic nouns, and normal sentences, as appropriate, depending on the context. The time difference between A and B may be substantially 0 (immediately after or immediately before). A time offset may be applied to the time at which A occurs. For example, "A" may be used interchangeably with "before/after the time offset at which A occurs". The time offset (for example, one or more symbols/slots) may be defined in advance or may be specified by the UE based on the notified information.

In the present disclosure, timing, time point, time, time instance, any time unit (e.g., slot, sub-slot, symbol, subframe), period, occasion, a resource, or the like may be used interchangeably.

Now, although the invention according to the present disclosure has been described in detail above, it is apparent to a person skilled in the art that the invention according to the present disclosure is by no means limited to the embodiments described in the present disclosure. The description of the present disclosure is provided only for the purpose of explaining examples, and should by no means be construed to limit the invention according to the present disclosure in any way.

## Claims

1. A terminal comprising:
a receiving section that receives a configuration or an indication related to multi-transmission/reception point (TRP); and
a control section that determines to perform at least one of first beam reporting for a first TRP and second beam reporting for a second TRP, based on the configuration or the indication and an event.

2. The terminal according to claim 1, wherein
the control section performs both of the first beam reporting and the second beam reporting irrespective of whether the event is an event related to the first TRP or an event related to the second TRP the event.

3. The terminal according to claim 1, wherein
the control section performs the first beam reporting when the event is an event related to the first TRP, and
the control section performs the second beam reporting when the event is an event related to the second TRP.

4. The terminal according to claim 1, wherein
the receiving section receives a response to at least one of the first beam reporting and the second beam reporting, and receives indication information transmitted in addition to the response, and
the control section determines, based on the indication information, any one of single-TRP operation and multi-TRP operation.

5. A radio communication method for a terminal, the radio communication method comprising:
receiving a configuration or an indication related to multitransmission/reception point (TRP); and
determining to perform at least one of first beam reporting for a first TRP and second beam reporting for a second TRP, based on the configuration or the indication and an event.

6. A base station comprising:
a transmitting section that transmits a configuration or an indication related to multi-transmission/reception point (TRP); and
a control section that controls reception of at least one of first beam reporting for a first TRP and second beam reporting for a second TRP performed based on the configuration or the indication and an event.
